(19) Europäisches Patentamt
European Patent Office
Office européen des brevets

(11) **EP 4 769 966 A1**

(12) **EUROPEAN PATENT APPLICATION**
published in accordance with Art. 153(4) EPC

(43) Date of publication:
**01.07.2026 Bulletin 2026/27**

(21) Application number: **23949463.6**

(22) Date of filing: **24.08.2023**

(51) International Patent Classification (IPC):
**H04B 7/0456** (2017.01)

(52) Cooperative Patent Classification (CPC):
**H04B 7/0456**

(86) International application number:
**PCT/CN2023/114811**

(87) International publication number:
**WO 2025/039278 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **ZHAO, Qun
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD FOR DETERMINING CODEBOOK, AND DEVICE AND STORAGE MEDIUM**

(57) The present disclosure relates to a method for determining a codebook, and a device and a storage medium. The method comprises: receiving first information, which comprises a direction parameter and a curvature parameter, wherein the direction parameter corresponds to at least one direction angle for beamforming of a first antenna array, the curvature parameter corresponds to the curvature or radius of curvature of the first antenna array relative to at least one beamforming position, and the first antenna array is an antenna array used for a network device to transmit a wireless signal to a terminal device; and on the basis of the direction parameter and the curvature parameter, determining a first codebook In this way, a first codebook constructed on the basis of a direction parameter and a curvature parameter can match the wireless propagation characteristic of a near-field area, thereby improving the transmission performance of the near-field area.

S3201, obtaining first information

↓

S3202, determining a first codebook

FIG. 3B

## Description

## TECHNICAL FIELD

The disclosure relates to the field of communication technologies, and particularly to a method and an apparatus for determining a codebook, and a storage medium.

## BACKGROUND

In a wireless communication system, a multiple input multiple output (MIMO) multi-antenna technology is widely used. The MIMO technology is highly sensitive to channel state information (CSI), especially spatial-domain CSI. If the spatial-domain CSI is inaccurate, performance of a MIMO link is degraded significantly. To accurately represent the spatial-domain CSI, a codebook may be used to quantize and represent the spatial-domain CSI.

## SUMMARY

Embodiments of the disclosure provide a method and an apparatus for determining a codebook, and a storage medium.

According to a first aspect of embodiments of the disclosure, a method for determining a codebook is provided. The method includes: receiving first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and determining a first codebook based on the direction parameter and the curvature parameter.

According to a second aspect of embodiments of the disclosure, a method for determining a codebook is provided. The method includes: sending first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal, and the direction parameter and the curvature parameter are used to determine a first codebook.

According to a third aspect of embodiments of the disclosure, a method for determining a codebook is provided. The method includes: sending, by a network device, first information to a terminal, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and determining, by the terminal, a first codebook based on the direction parameter and the curvature parameter.

According to a fourth aspect of embodiments of the disclosure, a terminal is provided. The terminal includes: a transceiver module, configured to receive first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and a processing module, configured to determine a first codebook based on the direction parameter and the curvature parameter.

According to a fifth aspect of embodiments of the disclosure, a network device is provided. The network device includes: a transceiver module, configured to send first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal, and the direction parameter and the curvature parameter are used to determine a first codebook.

According to a sixth aspect of embodiments of the disclosure, a communication device is provided. The communication device includes: one or more processors, in which the communication device is configured to perform the method described in optional implementations according to the first aspect or the second aspect.

According to a seventh aspect of embodiments of the disclosure, a storage medium is provided. The storage medium stores instructions which, when executed on a communication device, cause the communication device to perform the method described in optional implementations according to the first aspect or the second aspect.

According to an eighth aspect of embodiments of the disclosure, a communication system is provided. The communication system includes: a terminal, configured to perform the method described in optional implementations according to the first aspect, and a network device, perform the method described in optional implementations according to the second aspect.

The technical solutions provided in embodiments of the disclosure may include the following beneficial effects. The first information is received, in which the first information includes the direction parameter and the curvature parameter, the direction parameter corresponds to the at least one direction angle of beamforming by the first antenna array, and the curvature parameter corresponds to the curvature or the curvature radius of the first antenna array relative to the at least one beamforming position, and the first antenna array is the antenna array for transmitting the wireless signal by the network device to the terminal; and the first codebook is determined based on the direction parameter and the curvature parameter. In this case, the first codebook constructed based on the direction parameter and the curvature parameter may match wireless propagation characteristics of a near-field region, thus transmission performance in the near-field region is improved.

It should be noted that the above general description and the following detailed description are only illustrative and explanatory, and do not limit the embodiments of the disclosure.

BRIEF DESCRIPTION OF THE DRAWINGS

In order to more clearly illustrate technical solutions in embodiments of the disclosure, the accompanying drawings required for describing embodiments are introduced below. The following accompanying drawings are merely some embodiments of the disclosure and do not specifically limit the scope of protection of the disclosure.

FIG. 1A is a schematic diagram illustrating an architecture of a communication system according to an embodiment of the disclosure.

FIG. 1B is a schematic diagram illustrating a near-field region and a far-field region of an antenna array according to an embodiment of the disclosure.

FIG. 1C is a schematic diagram illustrating a terminal receiving an electromagnetic wave in a far-field region according to an embodiment of the disclosure.

FIG. 1D is a schematic diagram illustrating a terminal receiving an electromagnetic wave in a near-field region according to an embodiment of the disclosure.

FIG. 2A is a flowchart illustrating a method for determining a codebook according to an embodiment of the disclosure.

FIG. 2B is a schematic diagram illustrating a method for determining a difference between a first distance and a curvature radius according to an embodiment of the disclosure.

FIG. 3A is a flowchart illustrating a method for determining a codebook according to an embodiment of the disclosure.

FIG. 3B is a flowchart illustrating a method for determining a codebook according to an embodiment of the disclosure.

FIG. 4A is a flowchart illustrating a method for determining a codebook according to an embodiment of the disclosure.

FIG. 4B is a flowchart illustrating a method for determining a codebook according to an embodiment of the disclosure.

FIG. 4C is a flowchart illustrating a method for determining a codebook according to an embodiment of the disclosure.

FIG. 5 is a flowchart illustrating a method for determining a codebook according to an embodiment of the disclosure.

FIG. 6 is a flowchart illustrating a method for determining a codebook according to an embodiment of the disclosure.

FIG. 7A is a block diagram illustrating a terminal according to an embodiment of the disclosure.

FIG. 7B is a block diagram illustrating a network device according to an embodiment of the disclosure.

FIG. 8A is a block diagram illustrating a communication device according to an embodiment of the disclosure.

FIG. 8B is a block diagram illustrating a chip according to an embodiment of the disclosure.

**DETAILED DESCRIPTION**

Embodiments of the disclosure provide a method and an apparatus for determining a codebook, and a storage medium.

In a first aspect, embodiments of the disclosure provide a method for determining a codebook. The method includes: receiving first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and

determining a first codebook based on the direction parameter and the curvature parameter.

In the above embodiments, the first information is received, in which the first information includes the direction parameter and the curvature parameter, the direction parameter corresponds to the at least one direction angle of beamforming by the first antenna array, and the curvature parameter corresponds to the curvature or the curvature radius of the first antenna array relative to the at least one beamforming position, and the first antenna array is the antenna array for transmitting the wireless signal by the network device to the terminal; and the first codebook is determined based on the direction parameter and the curvature parameter. In this case, the first codebook is constructed based on the direction parameter and the curvature parameter, and the first codebook may match wireless propagation characteristics of a near-field region, thus transmission performance in the near-field region is improved.

In combination with some embodiments of the first aspect, in some embodiments, the first information includes at least one parameter group, one of the at least one parameter group corresponds to at least one direction parameter and one curvature parameter, and parameters of different parameter groups are not completely identical.

In the above embodiments, the direction parameter and the curvature parameter may be determined based on the at least one parameter group.

In combination with some embodiments of the first aspect, in some embodiments, the first information includes a direction parameter set and a curvature parameter set, the direction parameter set includes at least one direction parameter, and the curvature parameter set includes at least one curvature parameter.

In the above embodiments, the direction parameter and the curvature parameter may be determined based on the at least one direction parameter set and the at least one curvature parameter set.

In combination with some embodiments of the first aspect, in some embodiments, the first information further includes a codebook type parameter, the codebook type parameter indicates that the first codebook is a codebook used by a terminal in a near-field region, and the near-field region is a region determined based on an antenna parameter of the first antenna array.

In the above embodiments, instructing the terminal to use the first codebook may be based on the codebook type parameter, thus compatibility with other existing codebooks is achieved, and communication performance in the near-field region is also improved.

In combination with some embodiments of the first aspect, in some embodiments, a total number of direction parameters in the direction parameter set is a number determined based on an angular resolution of the first antenna array; or a total number of curvature parameters in the curvature parameter set is a number determined based on a distance resolution of the first antenna array.

In the above embodiments, the total number of parameters in each of the direction parameter set and the curvature parameter set may be determined based on related parameters of the first antenna array, which ensures performance and saves configuration signaling overhead.

In combination with some embodiments of the first aspect, in some embodiments, the direction parameter is a parameter determined based on a reference point of the first antenna array, and the reference point is a preset position on the first antenna array or a position outside the first antenna array.

In the above embodiments, the direction parameter may be determined based on the reference point.

In combination with some embodiments of the first aspect, in some embodiments, the first antenna array is a uniform linear array (ULA), and the direction parameter includes a first direction angle relative to a dimension in which the ULA is located; or the first antenna array is a uniform planar array (UPA), and the direction parameter includes a second direction angle and a third direction angle, the second direction angle and the third direction angle are direction angles relative to two different dimensions in which the UPA is located, respectively.

In the above embodiments, different direction parameters may be used for different types of antenna arrays, and the method for determining the codebook may be implemented in different scenarios.

In combination with some embodiments of the first aspect, in some embodiments, the first codebook includes at least one first codeword, and determining the first codebook based on the direction parameter and the curvature parameter includes: determining a precoding vector corresponding to the first codeword based on the direction parameter and the curvature parameter; and determining the first codebook based on the precoding vector.

In the above embodiments, the precoding vector of the codeword may be determined, thus the first codebook is obtained.

In combination with some embodiments of the first aspect, in some embodiments, determining the precoding vector corresponding to the first codeword based on the direction parameter and the curvature parameter includes: for one first codeword, determining at least one first coefficient corresponding to the first codeword based on the direction parameter and the curvature parameter, and determining the precoding vector corresponding to the first codeword based on the at least one first coefficient, in which one of the at least one first coefficient is a coefficient of the first codeword corresponding to one antenna port, and the antenna port corresponds to at least one component unit of the first antenna array.

In the above embodiments, the first coefficient of the first codeword corresponding to one antenna port may be obtained, thus the precoding vector of the codeword is determined.

In combination with some embodiments of the first aspect, in some embodiments, determining the at least one first coefficient corresponding to the first codeword based on the direction parameter and the curvature parameter includes: for one antenna port, determining a difference between a first distance and a curvature radius, and determining the first coefficient of the first codeword corresponding to the antenna port based on the difference, in which the first distance is a distance between a position of the antenna port and a beam center position, and the beam center position is a position determined based on the direction parameter and the curvature parameter.

In the above embodiments, the first coefficient may be obtained based on the difference between the first distance and the curvature radius.

In combination with some embodiments of the first aspect, in some embodiments, determining the difference between the first distance and the curvature radius includes: determining the first distance between the position of the antenna port and the beam center position based on the direction parameter, the curvature parameter, and a reference point of the first antenna array; and obtaining the difference between the first distance and the curvature radius.

In the above embodiments, an accurate distance difference is determined based on position information of the antenna port.

In combination with some embodiments of the first aspect, in some embodiments, determining the difference between the first distance and the curvature radius includes: obtaining the difference by calculating based on the direction parameter, the curvature parameter, a reference point of the first antenna array, and the position of the antenna port.

In the above embodiments, the difference between the first distance and the curvature radius may be accurately calculated based on the above parameters.

In combination with some embodiments of the first aspect, in some embodiments, determining the first coefficient of the first codeword corresponding to the antenna port based on the difference includes: obtaining a first phase corresponding to the antenna port by calculating based on the difference; and obtaining the first coefficient by calculating based on the first phase.

In the above embodiments, the first coefficient may be calculated.

In combination with some embodiments of the first aspect, in some embodiments, the method further includes: determining a second codeword from the first codebook, in which the second codeword is at least one first codeword in the first codebook that meets a performance requirement; and sending second information, in which the second codeword is number information of the second codeword in the first codebook.

In the above embodiments, the second codeword meeting the performance requirement may be determined from the first codebook and reported to the network device.

In combination with some embodiments of the first aspect, in some embodiments, determining the second codeword from the first codebook includes: obtaining a measurement result of the at least one first codeword in the first codebook by performing channel measurement based on a received first signal; and determining the at least one first codeword with the measurement result meeting the performance requirement as the second codeword, thus improving transmission performance.

In the above embodiments, the network device may accurately obtain the second codeword meeting the performance requirement by performing channel measurement on the first signal, further improving the transmission performance.

In a second aspect, embodiments of the disclosure provide a method for determining a codebook. The method includes: sending first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal, and the direction parameter and the curvature parameter are used to determine a first codebook.

In the above embodiments, the first codebook is constructed based on the direction parameter and the curvature parameter, and the first codebook may match wireless propagation characteristics of a near-field region, thus transmission performance in the near-field region is improved.

In combination with some embodiments of the second aspect, in some embodiments, the first information includes at least one parameter group, one of the at least one parameter group corresponds to at least one direction parameter and one curvature parameter, and parameters of different parameter groups are not completely identical; or the first information includes a direction parameter set and a curvature parameter set, the direction parameter set includes at least one direction parameter, and the curvature parameter set includes at least one curvature parameter.

In combination with some embodiments of the second aspect, in some embodiments, the first information further includes a codebook type parameter, the codebook type parameter indicates that the first codebook is a codebook used by a terminal in a near-field region, and the near-field region is a region determined based on an antenna parameter of the first antenna array.

In combination with some embodiments of the second aspect, in some embodiments, a total number of direction parameters in the direction parameter set is a number determined based on an angular resolution of the first antenna array; or a total number of curvature parameters in the curvature parameter set is a number determined based on a distance resolution of the first antenna array.

In combination with some embodiments of the second aspect, in some embodiments, the direction parameter is a parameter determined based on a reference point of the first antenna array, and the reference point is a preset position on the first antenna array or a position outside the first antenna array.

In combination with some embodiments of the second aspect, in some embodiments, the first antenna array is a ULA, and the direction parameter includes a first direction angle relative to a dimension in which the ULA is located; or the first antenna array is a UPA, and the direction parameter includes a second direction angle and a third direction angle, the second direction angle and the third direction angle are direction angles relative to two different dimensions in which the UPA is located, respectively.

In combination with some embodiments of the second aspect, in some embodiments, the method further includes: receiving second information, in which the second information is number information of a second codeword in the first codebook, and the second codeword is at least one first codeword determined by the terminal from the first codebook that meets a performance requirement.

In combination with some embodiments of the second aspect, in some embodiments, the method further includes: determining a direction parameter and a curvature parameter corresponding to the second codeword based on the second information; and determining a precoding vector corresponding to the second codeword based on the direction parameter and the curvature parameter.

In combination with some embodiments of the second aspect, in some embodiments, determining the precoding vector corresponding to the second codeword based on the direction parameter and the curvature parameter includes: determining at least one first coefficient corresponding to the second codeword based on the direction parameter and the curvature parameter, and determining the precoding vector corresponding to the second codeword based on the at least one first coefficient, in which one of the at least one first coefficient is a coefficient of the second codeword corresponding to one antenna port, and the antenna port corresponds to at least one component unit of the first antenna array.

In combination with some embodiments of the second aspect, in some embodiments, determining the at least one first coefficient corresponding to the second codeword based on the direction parameter and the curvature parameter includes: for one antenna port, determining a difference between a first distance and a curvature radius, and determining the first coefficient of the second codeword corresponding to the antenna port based on the difference, in which the first distance is a distance between a position of the antenna port and a beam center position, and the beam center position is a position determined based on the direction parameter and the curvature parameter.

In combination with some embodiments of the second aspect, in some embodiments, determining the difference between the first distance and the curvature radius includes: determining the beam center position based on the direction parameter, the curvature parameter, and a reference point of the first antenna array; determining the first distance between the position of the antenna port and the beam center position; and obtaining the difference between the first distance and the curvature radius.

In combination with some embodiments of the second aspect, in some embodiments, determining the difference between the first distance and the curvature radius includes: obtaining the difference by calculating based on the direction parameter, the curvature parameter, a reference point of the first antenna array, and the position of the antenna port.

In combination with some embodiments of the second aspect, in some embodiments, determining the first coefficient of the second codeword corresponding to the antenna port based on the difference includes: obtaining a first phase corresponding to the antenna port by calculating based on the difference; and obtaining the first coefficient by calculating based on the first phase.

In a third aspect, embodiments of the disclosure provide a method for determining a codebook. The method includes: sending, by a network device, first information to a terminal, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and determining, by the terminal, a first codebook based on the direction parameter and the curvature parameter.

In the above embodiments, the first codebook is constructed based on the direction parameter and the curvature parameter, and the first codebook may match wireless propagation characteristics of a near-field region, thus transmission performance in the near-field region is improved.

In a fourth aspect, embodiments of the disclosure provide a terminal. The terminal includes at least one of a transceiver module or a processing module, in which the terminal is configured to perform optional implementations of the first aspect.

In a fifth aspect, embodiments of the disclosure provide a network device. The network device includes at least one of a transceiver module or a processing module, in which the network device is configured to perform optional implementations of the second aspect.

In a sixth aspect, embodiments of the disclosure provide a communication device. The communication device includes: one or more processors, in which the communication device is configured to perform optional implementations of the first aspect or optional implementations of the second aspect.

In a seventh aspect, embodiments of the disclosure provide a storage medium. The storage medium stores instructions which, when executed on a communication device, cause the communication device to perform the method described in optional implementations of the first aspect or the method described in optional implementations of the second aspect.

In an eighth aspect, embodiments of the disclosure provide a communication system. The communication system includes: a terminal, configured to perform the method described in optional implementations of the first aspect, and a network device, configured to perform the method described in optional implementations of the second aspect.

In a ninth aspect, embodiments of the disclosure provide a program product. The program product, when executed by a communication device, causes the communication device to perform the method described in optional implementations of the first aspect or the method described in optional implementations of the second aspect.

In a tenth aspect, embodiments of the disclosure provide a computer program. When the computer program is running on a computer, the computer is caused to perform the method described in optional implementations of the first aspect or the method described in optional implementations of the second aspect.

In an eleventh aspect, embodiments of the disclosure provide a chip or a chip system. The chip or chip system includes a processing circuit, configured to perform the method described in optional implementations of the first aspect or the method described in optional implementations of the second aspect.

It may be understood that the terminal, the network device, the communication device, the communication system, the storage medium, the program product, the computer program and the chip or the chip system are all used to implement the method in embodiments of the disclosure. Thus, regarding beneficial effects they may achieve, reference may made be to the beneficial effects in the corresponding methods, which is not repeated herein.

Embodiments of the disclosure provide a method and an apparatus for determining a codebook, and a storage medium. In some embodiments, terms such as "method for determining a codebook", "method for information processing", and "communication method" may be used interchangeably; terms such as "apparatus for determining a codebook", "apparatus for information processing", "communication apparatus" and "communication device" may be used interchangeably; and terms such as "system for information processing", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined. In addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, the terms such as "in response to...", "in response to determining...", "in a case of/that...", "upon", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., a network device, an access network device, a core network device, etc.) included in the network.

In some embodiments, the network device may include at least one of the access network device or the core network device.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" or the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" or the like may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel or the direct channel, and the uplink, the downlink, etc. may be replaced with sidelink or direct link.

In some embodiments, the terminal may be replaced with the access network device, the core network device, or the network device. In this case, the access network device, the core network device, or the network device may also be configured to have a structure that has all or part of functions of the terminal.

In some embodiments, acquisition of data, information, etc. may comply with laws and regulations of the country to which the data is obtained.

In some embodiments, data, information, etc. may be obtained with consent from users.

In addition, each element, each row, or each column in the table of embodiments of the disclosure may be implemented as an independent embodiment, and a combination of any elements, any rows, or any columns may also be implemented as an independent embodiment.

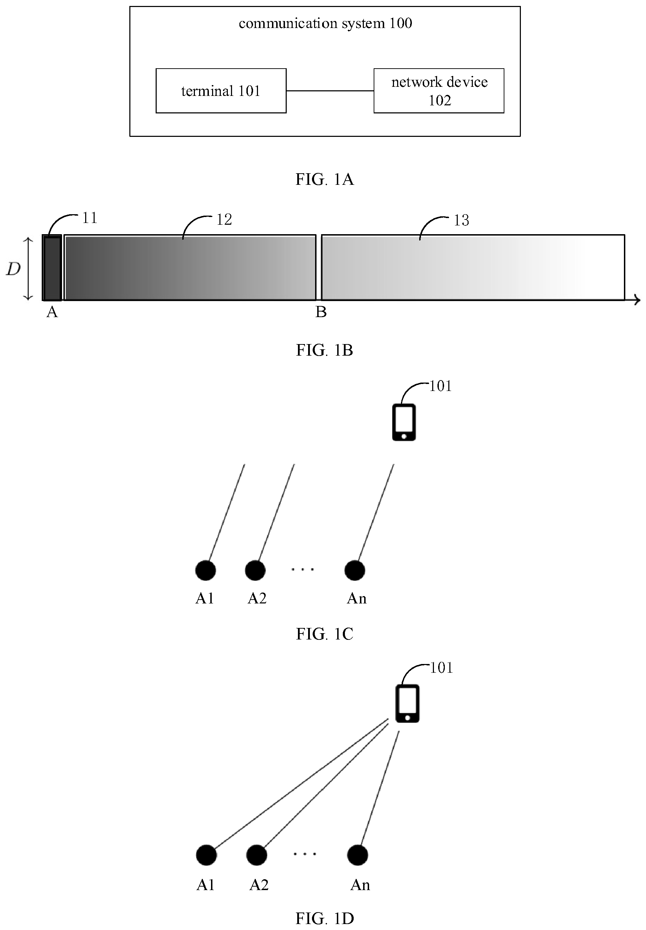

FIG. 1A is a schematic diagram illustrating an architecture of a communication system according to an embodiment of the disclosure. As shown in FIG. 1A, a communication system 100 includes a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device includes at least one of: the access network device, or the core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a device, or may be a plurality of devices or device groups. The core network may include, for example, at least one of an evolved packet core (EPC), a 5G core network (5GCN), or a next generation core (NGC).

It may be understood that the communication system described in embodiments of the disclosure aims to more clearly illustrate the technical solutions of embodiments of the disclosure, and does not constitute a limitation on the technical solutions provided in embodiments of the disclosure. A person skilled in the art may know that with the evolution of the system architecture and the emergence of new service scenarios, the technical solution provided in embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects than those shown in FIG. 1A. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, the network device 102 in the communication system 100 may include a first antenna array, and the terminal may include a second antenna array. The network device may send a downlink signal to the terminal via the first antenna array, and may also receive an uplink signal sent by the terminal via the first antenna array. Similarly, the terminal may send an uplink signal to the network device via the second antenna array, and may also receive a downlink signal sent by the network device via the second antenna array. In an example, the first antenna array may be an antenna array supporting multiple input multiple output (MIMO) technology, such as a large-scale antenna array or an ultra-large-scale antenna array.

In some embodiments of the disclosure, to meet a demand for ever-increasing data rates, the communication system may perform uplink and downlink transmission by employing highfrequency spectrum resources, such as millimeter wave bands, terahertz bands, and the like. Highfrequency transmission suffers from greater transmission attenuation, especially severe absorption by water molecules and oxygen in the air, resulting in a very limited transmission distance and a very limited coverage range. On one hand, higher frequency implies a shorter wavelength. Compared with mid-to-low frequency spectrum, more antennas, such as large-scale antennas or ultra-large-scale antennas, may be deployed under the same aperture size. On the other hand, the large-scale antenna may provide a larger beamforming gain, effectively compensating for severe transmission loss, thus extending the coverage range and the transmission distance. Thus, highfrequency transmission and large-scale antenna technology are complementary technologies. The combination of the two may be one of the most promising technologies in new-generation wireless communication.

Multi-antenna technology, i.e., the MIMO technology, is highly sensitive to channel state information (CSI), especially spatial-domain CSI. If the spatial-domain CSI is inaccurate, performance of a MIMO link is degraded significantly. In an example, in a frequency division duplex (FDD) system, for the network device (for example, an access network device) to obtain accurate spatial-domain CSI, the terminal needs to feed back the spatial-domain CSI obtained by measuring a channel state information reference signal (CSI-RS) to the network device. In order to accurately represent the spatial-domain CSI, a codebook may be used to quantize and represent the spatial-domain CSI.

FIG. 1B is a schematic diagram illustrating a near-field region and a far-field region of an antenna array according to an embodiment of the disclosure. As shown in FIG. 1B, for a first antenna array 11 (its antenna aperture is denoted as D), its electromagnetic (EM) field may be divided into a near-field region 12 and a far-field region 13. A location where the first antenna array is a point A, a boundary between the near-field region 12 and the far-field region 13 is a point B, and a distance between the point A and the point B may be referred to as a Rayleigh distance.

An expression for the Rayleigh distance satisfies the following relationship: $R = (2 * D^2)/\lambda$.

In this expression, R represents the Rayleigh distance (i.e., the distance between the point A and the point B), D represents an effective aperture of the first antenna array, and $\lambda$ represents a wavelength of an electromagnetic wave transmitted by the first antenna array.

Based on the above expression, it may be known that a range of the near-field may be determined based on the effective aperture of the array and the wavelength. In an existing cellular wireless communication system, terminals are mostly located in the far field of the first antenna array of the network device. If a carrier frequency becomes higher (i.e., the wavelength of the electromagnetic wave becomes smaller), and/or the effective aperture of the antenna array becomes larger, the range of the near-field region may expand. Even if an existing network topology (for example, a distance between access network devices and locations of the access network devices, a location distribution of terminals, etc.) remains unchanged, a terminal located in the far-field region at a low frequency may also be located in the near-field region at a high frequency, i.e., a far-field UE at the low frequency is likely to become a near-field UE at the high frequency.

In some embodiments, electromagnetic waves received by the terminal in the near-field region and the far-field region are different.

FIG. 1C is a schematic diagram illustrating a terminal receiving an electromagnetic wave in a far-field region according to an embodiment of the disclosure. As shown in FIG. 1C, the first antenna array may include at least one antenna port, for example, a plurality of antenna ports A1, A2, ..., An in FIG. 1C. A terminal 101 may be in the far-field region of the first antenna array, and a beam received by the terminal 101 may be a two-dimensional (2 dimension, 2D) directional beam. For example, in the far-field region, an electromagnetic wave received by the terminal 101 (i.e., an electromagnetic wave transmitted by a first antenna array) may be a plane wave, and a beam for the terminal may be a two-dimensional (2 dimension, 2D) directional beam pointing to the terminal. For any path in multipath propagation, a time and a phase of arrival at a receiving antenna array (for example, a second antenna array) of the terminal are equally spaced.

FIG. 1D is a schematic diagram illustrating a terminal receiving an electromagnetic wave in a near-field region according to an embodiment of the disclosure. As shown in FIG. 1D, the first antenna array may similarly include at least one antenna port, for example, a plurality of antenna ports A1, A2, ..., An in FIG. 1D. A terminal 101 may be in the near-field region of the first antenna array, and a beam received by the terminal 101 may be a three-dimensional (3-dimension, 3D) beam. For example, in the near-field region, an electromagnetic wave received by the terminal 101 (i.e., an electromagnetic wave transmitted by a first antenna array) may be a spherical wave, and a beam for the terminal may be a three-dimensional beam pointing to the terminal. For any path in multipath propagation, a time and a phase of arrival at a receiving antenna array (for example, a second antenna array) of the terminal may no longer be equally spaced.

In some embodiments, a codebook for a MIMO system may all be constructed based on a discrete Fourier transform (DFT) vector. For example, a codebook in 4G LTE is composed of the DFT vector and its Householder-transformed vector. In 5G NR, a Type 1 codebook is composed of the DFT vector and its oversampled version; a Type 2 codebook employs the DFT vector and its oversampled version as a spatial-domain orthogonal basis vector. A codebook constructed based on the DFT vector may achieve good signal transmission performance in the far-field region. However, in the near-field region, since the time and the phase of beam arrival at the terminal may no longer be equally spaced an accuracy of the codebook constructed based on the DFT vector is not high, and the performance of the best codeword selected based on the codebook is still poor, leading to degraded signal transmission performance. That is, the codebook constructed based on the DFT vector may no longer be suitable for a near-field UE. Thus, how to design a codebook in the near-field region becomes an urgent problem to be solved.

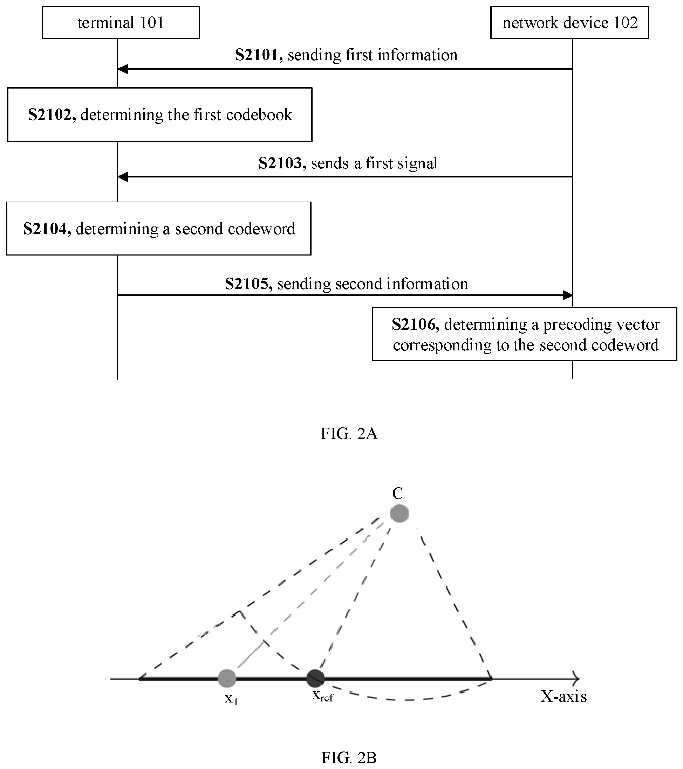

FIG. 2A is a flowchart illustrating a method for determining a codebook according to an embodiment of the disclosure. The method may be performed by the above communication system. As shown in FIG. 2A, the method may include the following steps S2101 to S2106.

At step S2101, a network device sends first information to a terminal.

In some embodiments, the terminal may receive the first information. For example, the terminal may receive the first information sent by the network device. For another example, the terminal may also receive the first information sent by another entity.

In some embodiments, the first information may be used to determine a first codebook. For example, the terminal may determine the first codebook based on the first information, and the network device may also determine the first codebook based on the first information.

In some embodiments, the first information may be used to construct the first codebook. For example, the terminal may construct the first codebook based on the first information, and the network device may also construct the first codebook based on the first information.

In some embodiments, the first information may be used to determine or construct at least one first codeword. In an example, the first codebook may include the at least one first codeword, and each codeword in the first codebook may be determined or constructed based on the first information.

In some embodiments, the first codebook may be a codebook used by a terminal in a near-field region, and the near-field region is a region determined based on an antenna parameter of the first antenna array. For description of the near-field region, reference may be made to the description in the above embodiments, which is not repeated herein.

In other embodiments, the first codebook may be a codebook used by a terminal in a far-field region.

In other embodiments, an applicable region of the first codebook may not be limited, and the terminal may use the first codebook in any region.

In some embodiments, the name of the first information is not limited, for example, it may be "codebook information", "codebook parameter information", "near-field codebook information", "near-field codebook parameter information", or the like. Similarly, the name of the first codebook is not limited, for example, it may be "codebook", "codeword set", "codeword sequence", "near-field codebook", "near-field codeword set", "near-field codeword sequence", or the like.

In some embodiments, the network device may send a first message, and the first message may include the first information. For example, the network device may send the first message to the terminal. In an example, the terminal may receive the first message.

The first message may include at least one of a radio resource control (RRC) message, a medium access control (MAC) control element (CE), downlink control information (DCI), or other messages sent by the network device to the terminal.

In some embodiments, the first information may include a direction parameter and a curvature parameter. The direction parameter may correspond to at least one direction angle of beamforming by a first antenna array, and the curvature parameter may correspond to a curvature or a curvature radius of the first antenna array relative to at least one beamforming position. The first antenna array may be an antenna array for transmitting a wireless signal by a network device to a terminal.

In some embodiments, the terms such as "beamforming", "beam shaping", "Beamforming", and the like may be used interchangeably.

In some embodiments, the first antenna array may be a ULA, and the direction parameter may include a first direction angle relative to a dimension in which the ULA is located.

In some embodiments, the first antenna array may be a UPA, and the direction parameter may include a second direction angle and a third direction angle. The second direction angle and the third direction angle are direction angles relative to two different dimensions in which the UPA is located, respectively, for example, a direction angle of a vertical dimension and a direction angle of a horizontal dimension, respectively.

In some embodiments, the curvature parameter may include a curvature or a curvature radius. The curvature and the curvature radius may be reciprocals of each other.

In some embodiments, the first information may include at least one parameter group. One of the at least one parameter group corresponds to at least one direction parameter and one curvature parameter. In an example, parameters of different parameter groups are not completely identical. In an example, the parameter group may be a two-tuple or a three-tuple.

In an implementation, the first antenna array may be a ULA array, and the parameter group may be a two-tuple represented as $(\Phi, k)$, in which $\Phi$ represents a

first direction angle (i.e., the first direction angle in the dimension in which the ULA is located), and k represents a curvature. The first information may include one or more parameter groups. For example, the first information may include a first parameter tuple sequence, which may be an "angle-curvature" parameter tuple sequence. An expression of the first tuple sequence may be $\{(\Phi_n, k_n) \mid n=0, 1 ... \}$. In this expression, $\Phi_n$ represents a first direction angle in the $n_{th}$ parameter group, $k_n$ represents a curvature in the $n_{th}$ parameter group, and the variable n sequentially takes positive integers starting from 1. Parameters included in different parameter groups are not completely identical. In an example, values of parameters included in the parameter groups satisfy an expression $(V\ n{\neq}m, \Phi_n{\neq}\Phi_m \cup k_n{\neq}k_m)$, i.e., parameters included in any two different parameter groups in the parameter tuple sequence are not completely identical.

In another implementation, the first antenna array may be a ULA array, and the parameter group may be a two-tuple represented as $(\Phi, r)$, in which $\Phi$ represents a first direction angle (i.e., the first direction angle in the dimension in which the ULA is located), and r represents a curvature radius. The first information may include one or more parameter groups. For example, the first information may include a second parameter tuple sequence, which may be an "angle-curvature radius" parameter tuple sequence. An expression of the second tuple sequence may be $\{(\Phi_n, r_n) \mid n=0, 1... \}$. In this expression, $\Phi_n$ represents a first direction angle in the $n_{th}$ parameter group, $r_n$ represents a curvature radius in the $n_{th}$ parameter group, and the variable n sequentially takes positive integers starting from 1. In an example, values of parameters included in the parameter groups satisfy an expression $(V\ n{\neq}m, \Phi_n{\neq}\Phi_m \cup r_n{\neq}r_m)$, i.e., any two different parameter groups in the parameter tuple sequence are not completely identical.

In another implementation, the first antenna array may be a UPA array, and the parameter group may be a three-tuple represented as $(\theta, \Phi, k)$, in which $\theta$ represents a second direction angle (for example, a vertical direction angle), $\Phi$ represents a third direction angle (for example, a horizontal direction angle), the second direction angle and the third direction angle are direction angles relative to two different dimensions in which the UPA is located, respectively, and k represents a curvature. The first information may include one or more parameter groups. For example, the first information may include a third parameter tuple sequence, which may be an "angle-curvature" parameter tuple sequence. An expression of the third tuple sequence may be $\{(\theta_n, \Phi_n, k_n) \mid n=0, 1... \}$. In this expression, $\theta_n$ represents a second direction angle in the $n_{th}$ parameter group, $\Phi_n$ represents a third direction angle in the $n_{th}$ parameter group, $k_n$ represents a curvature in the $n_{th}$ parameter group, and the variable n sequentially takes positive integers starting from 1. Parameters included in different parameter groups are not completely identical. In an example, values of parameters included in the parameter groups satisfy an expression $(V\ n{\neq}m, \theta_n{\neq}\theta_m \cup \Phi_n{\neq}\Phi_m \cup k_n{\neq}k_m)$, i.e., any two different parameter groups in the parameter tuple sequence are not completely identical.

In another implementation, the first antenna array may be a UPA array, and the parameter group may be a three-tuple represented as $(\theta, \Phi, r)$, in which $\theta$ represents a second direction angle (for example, a vertical direction angle), $\Phi$ represents a third direction angle (for example, a horizontal direction angle), the second direction angle and the third direction angle are direction angles relative to two different dimensions in which the UPA is located, respectively, and r represents a curvature radius. The first information may include one or more parameter groups. For example, the first information may include a fourth parameter tuple sequence, which may be an "angle-curvature radius" parameter tuple sequence. An expression of the fourth tuple sequence may be $\{(\theta_n, \Phi_n, r_n) \mid n=0, 1... \}$. In this expression, $\theta_n$ represents a second direction angle in the $n_{th}$ parameter group, $\Phi_n$ represents a third direction angle in the $n_{th}$ parameter group, $r_n$ represents a curvature radius in the $n_{th}$ parameter group, and the variable n sequentially takes positive integers starting from 1. Parameters included in different parameter groups are not completely identical. In an example, values of parameters included in the parameter groups satisfy an expression $(V\ n{\neq}m, \theta_n{\neq}\theta_m \cup \Phi_n{\neq}\Phi_m \cup r_n{\neq}r_m)$, i.e., any two different parameter groups in the parameter tuple sequence are not completely identical.

Thus, the direction parameter and the curvature parameter may be determined based on any one of the above implementations of the parameter group.

In some embodiments, the first information may include a direction parameter set and a curvature parameter set. The direction parameter set includes at least one direction parameter, and the curvature parameter set includes at least one curvature parameter. In an example, a parameter group including the direction parameter and the curvature parameter may be obtained by any combination of the direction parameters in the direction parameter set and curvature parameters in the curvature parameter set.

In an implementation, the first antenna array may be the ULA array, the direction parameter set may be a first direction angle set, and an expression of the first direction angle set $\Phi$ may be $\{\Phi_1, \Phi_2, \Phi_3, ...\}$; the curvature parameter set may be a curvature set, and an expression of the curvature set k may be $\{k_1, k_2, k_3, ...\}$. The first information may include the first direction angle set and the curvature set.

In another implementation, the first antenna array is the ULA array, the direction parameter set may be a first direction angle set, and an expression of the first direction angle set $\Phi$ may be $\{\Phi_1, \Phi_2, \Phi_3, ...\}$; the curvature parameter set may be a curvature radius set, and an expression of the curvature radius set r may be $\{r_1, r_2, r_3, ... \}$. The first information may include the first direction angle set and the curvature radius set.

In another implementation, the first antenna array is the UPA array, the direction parameter set may include a second direction angle set and a third direction angle set, an expression of the second direction angle set $\theta$ may be $\{\theta_1, \theta_2, \theta_3, ...\}$, and an expression of the third direction angle set $\Phi$ may be $\{\Phi_1, \Phi_2, \Phi_3, ...\}$; the curvature parameter set may be a curvature set, and an expression of the curvature set k may be $\{k_1, k_2, k_3, ...\}$. The first information may include the first direction angle set, the second direction angle set, and the curvature set.

In another implementation, the first antenna array is the UPA array, the direction parameter set may include a second direction angle set and a third direction angle set, an expression of the second direction angle set $\theta$ may be $\{\theta_1, \theta_2, \theta_3, ...\}$, and an expression of the third direction angle set $\Phi$ may be $\{\Phi_1, \Phi_2, \Phi_3, ...\}$; the curvature parameter set may be a curvature radius set, and an expression of the curvature radius set r may be $\{r_1, r_2, r_3, ...\}$. The first information may include the first direction angle set, the second direction angle set, and the curvature radius set.

Thus, the direction parameter and the curvature parameter may be determined based on the direction parameter set and the curvature parameter set.

In some embodiments, a total number of direction parameters in the direction parameter set is a number determined based on an angular resolution of the first antenna array.

It should be noted that the angular resolution may indicate a pointing accuracy of the first antenna array.

In an implementation, the smaller the angular resolution of the first antenna array, the greater the total number of direction parameters in the direction parameter set. In an example, the total number of direction parameters in the direction parameter set may be determined based on the angular resolution and a coverage angle of the first antenna array. For example, if the angular resolution of the first antenna array is 0.6 degrees and the coverage angle is 120 degrees, the total number of direction parameters in the direction parameter set may be 120/0.6=200.

Thus, the total number of direction parameters in the direction parameter set may be determined based on specification parameters of the first antenna array.

In some embodiments, a total number of curvature parameters in the curvature parameter set is a number determined based on a distance resolution of the first antenna array.

It should be noted that the distance resolution may be used to indicate, in an electromagnetic wave image of the first antenna array, the minimum distance at which two targets located at the same direction angle but at different distances from the first antenna array is capable of being distinguished.

In an implementation, the smaller the distance resolution, the greater the total number of curvature parameters in the curvature parameter set. In an example, the total number of curvature parameters in the curvature parameter set may be obtained based on the distance resolution and a near-field coverage distance of the first antenna array. For example, if the distance resolution of the first antenna array is 0.5 meters and the near-field coverage distance is 300 meters, the total number of curvature parameters in the curvature parameter set may be 300/0.5=600.

Thus, the total number of curvature parameters in the curvature parameter set may be determined based on specification parameters of the first antenna array.

In some embodiments, the direction parameter is a parameter determined based on a reference point of the first antenna array.

The reference point may be any preset position. For example, the reference point may be a position on the first antenna array. For another example, the reference point may be a position outside the first antenna array.

In an example, a centroid of the first antenna array may be determined as the reference point.

In an implementation, the first antenna array is the ULA, and an array center or any end (point or antenna element) of the first antenna array may be determined as the reference point.

In another implementation, the first antenna array is the UPA, and a centroid of the array, a point (for example, a midpoint) on an edge, or a point or antenna element at a corner may be determined as the reference point.

In some embodiments, the first information may further include a codebook type parameter. The codebook type parameter may indicate that the first codebook is a codebook used by a terminal in a near-field region, and the near-field region is a region determined based on an antenna parameter of the first antenna array.

The codebook type parameter may also be referred to as a codebook type indication (codebookType).

In an implementation, a value of the codebook type parameter (codebookType) may be typeI-Near-Field, configured to instruct the terminal to determine the codebook used in the near-field region (for example, the first codebook) based on the first information.

In another implementation, a value of the codebook type parameter (codebookType) may be typeI-Far-Field, configured to instruct the terminal to determine the codebook used in a far-field region based on the first information.

At step S2102, the terminal determines the first codebook.

In some embodiments, the terminal may determine the first codebook based on the first information.

In some embodiments, the terminal may determine the first codebook based on the direction parameter and the curvature parameter.

In some embodiments, the first codebook includes at least one first codeword; the terminal may determine a precoding vector corresponding to the first codeword based on the direction parameter and the curvature parameter; and determine the first codebook based on the precoding vector. For example, the first codebook includes N first codewords, each first codeword corresponds to one precoding vector, and the first codebook is determined based on the N precoding vectors.

For example, one precoding vector corresponding to one first codeword may be obtained based on one direction parameter and one curvature parameter, and the precoding vectors of the N first codewords may constitute the first codebook.

In some embodiments, for one first codeword, the terminal may determine the precoding vector corresponding to the first codeword via the following steps S11 and S12.

At step S11, the terminal determines at least one first coefficient corresponding to the first codeword based on the direction parameter and the curvature parameter.

One of the at least one first coefficient may be a coefficient of the first codeword corresponding to one antenna port, and the antenna port corresponds to at least one component unit of the first antenna array. In an example, the first antenna array may include one or more antenna ports, and the one antenna port may correspond to one or more antenna elements.

At step S12, the terminal determines the precoding vector corresponding to the first codeword based on the at least one first coefficient.

In some embodiments, for one antenna port, the terminal may determine the first coefficient via the following steps S111 and S112.

At step S111, the terminal determines a difference between a first distance and a curvature radius.

The first distance is a distance between a position of the antenna port and a beam center position. The beam center position is a position determined based on the direction parameter and the curvature parameter. The difference may be any real number, for example, the difference may be positive (greater than 0), negative (less than 0), or zero.

In an implementation, one antenna port may correspond to one antenna element, and the position of the antenna port may be the position of the antenna element.

In another implementation, one antenna port may correspond to a plurality of antenna elements, and the position of the antenna port may be a centroid position of the corresponding plurality of antenna elements.

For example, if the plurality of antenna elements corresponding to the one antenna port are one-dimensional, the plurality of antenna elements are connected to form a line segment (such as a row, a column, or a diagonal line of antennas), then a midpoint position of the line segment is the position of the antenna port.

For example, if the plurality of antenna elements corresponding to the one antenna port are two-dimensional, for example, two in each of the horizontal and vertical directions, totaling four antenna elements, then a center position of this rectangular region may serve as the position of the antenna port.

There may be a plurality of ways for the terminal to determine the difference between the first distance and the curvature radius.

In an implementation, the terminal may determine the beam center position based on the direction parameter, the curvature parameter, and a reference point of the first antenna array; determine the first distance between the position of the antenna port and the beam center position; and obtain the difference between the first distance and the curvature radius.

FIG. 2B is a schematic diagram illustrating a method for determining a difference between a first distance and a curvature radius according to an embodiment of the disclosure. As shown in FIG. 2B, an X-axis represents a direction of a dimension in which the ULA is located when the first antenna array is the ULA. A point $X_{ref}$ represents a position of the reference point of the first antenna array. The reference point may be a position of a certain antenna port of the first antenna array, or may be any position. A point $X_1$ represents a position of one antenna port of the first antenna array. A point C represents a beam center position corresponding to one first codeword. A distance between the point C and the point $X_{ref}$ is the curvature radius (a radius determined based on the curvature parameter). An angle between the line segment formed by the point C and the point $X_{ref}$ and the X-axis is the first direction angle (an angle determined based on the direction parameter).

As shown in FIG. 2B, the beam center position corresponding to the first codeword may be calculated based on the direction parameter and the curvature parameter. For example, the beam center position (the position of point C) may be calculated based on the first direction angle and the curvature radius.

For an antenna port in the first antenna array, the first distance is the distance from the antenna port to the beam center position. As shown in FIG. 2B, the position of the antenna port is the point $X_1$, and the distance between the point C and the point $X_1$ is the first distance. Thus, the difference between the first distance and the curvature radius may be calculated.

In another implementation, the terminal may calculate the difference based on the direction parameter, the curvature parameter, the reference point of the first antenna array, and the position of the antenna port.

As shown in FIG. 2B, the point C, the point $X_{ref}$, and the point $X_1$ form a triangle. Three sides of the triangle are defined as a first line segment (a line segment between the point C and the point $X_{ref}$), a second line segment (a line segment between the point $X_{ref}$ and the point $X_1$), and a third line segment (a line segment between the point C and the point $X_1$), respectively. A

length of the first line segment may be the curvature radius, which may be determined based on the curvature parameter. A length of the second line segment may be determined based on the position of the reference point (point $X_{ref}$) and the position of the antenna port (point $X_1$). An angle between the first line segment and the second line segment may be determined based on the direction parameter. A length of the third line segment, which is the first distance, may be calculated based on the first line segment, the second line segment, and the angle between the first line segment and the second line segment of the triangle. Thus, the difference between the first distance and the curvature radius may be calculated.

At step S112, the terminal determines the first coefficient of the first codeword corresponding to the antenna port based on the difference.

In some embodiments, the terminal may obtain a first phase corresponding to the antenna port by calculating based on the difference; and obtain the first coefficient by calculating based on the first phase.

In an implementation, an expression of the first phase may be: $\varphi_1 = (2\pi / \lambda) * d(X_1)$.

In this expression, $\varphi_1$ represents the first phase corresponding to the antenna port, $d(X_1)$ represents the difference, i.e., a difference between the distance from the antenna port to the beam center position and the curvature radius, $\pi$ represents a circular constant, and $\lambda$ represents a wavelength of an electromagnetic wave transmitted by the first antenna array.

In an implementation, an expression of the first coefficient may be: $f_1 = e^{(j\varphi 1)}$.

In this expression, $f_1$ represents a first coefficient corresponding to the antenna port, $\varphi_1$ represents a first phase corresponding to the antenna port, for example, $j = \sqrt{-1}$ is an imaginary unit, and e is the base of the natural logarithm, i.e., a natural constant.

In some embodiments, one first antenna array ULA includes N antenna ports, and the corresponding first phases are $\phi_1, \phi_2, ..., \phi_N$, respectively. An expression of the precoding vector corresponding to the first codeword may be

$$\frac{1}{\sqrt{N}} \begin{bmatrix} e^{j\phi_1} \\ e^{j\phi_2} \\ \vdots \\ e^{j\phi_N} \end{bmatrix}.$$

In this expression, N is the total number of antenna ports of the first antenna array, $j = \sqrt{-1}$, e is the base of the natural logarithm, $\phi_1$ is a first phase corresponding to the first antenna port, $\phi_2$ is a first phase corresponding to the second antenna port, and $\phi_N$ is a first phase corresponding to the Nth antenna port.

For example, an expression of the first coefficient for the antenna port with the smallest serial number or index (for example, the first antenna port) is: $\frac{e^{j\phi_1}}{\sqrt{N}}$.

In other embodiments, an expression of the precoding vector corresponding to the first codeword may be: $\frac{1}{\sqrt{N}} \begin{bmatrix} 1 \\ e^{j(\phi_2 - \phi_1)} \\ \vdots \\ e^{j(\phi_N - \phi_1)} \end{bmatrix}$.

In this expression, N is the total number of antenna ports of the first antenna array, $j = \sqrt{-1}$, e is the base of the natural logarithm, $\phi_1$ is a first phase corresponding to the first antenna port, $\phi_2$ is a first phase corresponding to the second antenna port, and $\phi_N$ is a first phase corresponding to the $N_{th}$ antenna port.

For example, an expression of the first coefficient for the antenna port with the smallest serial number or index (for example, the first antenna port) is: $\frac{1}{\sqrt{N}}$.

FIG. 2B is a schematic diagram illustrating a method for determining a first coefficient of a codeword according to an embodiment of the disclosure. As shown in FIG. 2B, the X-axis represents the direction of the dimension in which the ULA is located when the first antenna array is the ULA. The point $X_{ref}$ represents the position of the reference point of the first antenna array. The reference point may be the position of a certain antenna port of the first antenna array, or may be any position. The point $X_1$ represents the position of one antenna port of the first antenna array. The point C represents a beam center position corresponding to one first codeword. The distance between the point C and the point $X_{ref}$ is the curvature radius (a radius determined based on the curvature parameter). The angle between the line segment formed by the point C and the point $X_{ref}$ and the X-axis is the first direction angle (an angle determined based on the direction parameter).

In an example, for one first codeword, the first coefficient of the first codeword may be determined via the following steps S21, S22, and S23.

At step S21, the beam center position corresponding to the first codeword is calculated based on the direction parameter and the curvature parameter.

As shown in FIG. 2B, the beam center position (a position of the point C) may be calculated based on the first direction angle and the curvature radius.

At step S22, for one antenna port in the first antenna array, a difference between a first distance and the curvature radius is calculated.

The first distance is the distance from the antenna port to the beam center position. As shown in FIG. 2B, the position of the antenna port is the point $X_1$, and the distance between the point C and the point $X_1$ is the first distance.

At step S23, a first phase corresponding to the antenna port is obtained by calculating based on the difference, and the first coefficient is obtained by calculating based on the first phase.

For an expression of the first phase and the first coefficient, reference may be made to the description in the above embodiments of the disclosure, which is not repeated herein.

In some embodiments, the first phase may also be referred to as an initial phase, and the first coefficient may also be referred to as a complex coefficient or a weight.

At step S2103, the network device sends a first signal to the terminal.

In some embodiments, the terminal may receive the first signal. For example, the terminal may receive the first signal sent by the network device. For another example, the terminal may also receive the first signal sent by another entity.

In some embodiments, the first signal may be used to measure a downlink channel.

In some embodiments, the name of the first signal is not limited, for example, it may be "reference signal", "measurement signal", or the like.

In some embodiments, the first signal may include at least one of a CSI-RS, a reference signal (RS), or other signals sent by the network device to the terminal.

At step S2104, the terminal determines a second codeword.

In some embodiments, the terminal may determine the second codeword from the first codebook.

In some embodiments, the second codeword is at least one first codeword in the first codebook that meets a performance requirement.

In some embodiments, the terminal may obtain a measurement result of the at least one first codeword in the first codebook by performing channel measurement based on a received first signal; and determine the at least one first codeword with the measurement result meeting the performance requirement as the second codeword.

In an implementation, the measurement result meeting the performance requirement may be that the measurement result is optimal, and the second codeword may be an optimal codeword obtained via measurement.

In an implementation, the measurement result may be a signal quality, and the measurement result meeting the performance requirement may be that the signal quality is the strongest, or the signal quality is greater than or equal to a preset signal threshold. The signal quality may include at least one of reference signal receiving power (RSRP), reference signal receiving quality (RSRQ), or signal to interference plus noise ratio (SINR).

The first codebook is determined based on the direction parameter and the curvature parameter, the second codeword (the optimal codeword) determined by the terminal from the first codebook may effectively utilize channel characteristics of the near-field and improve a capacity of a near-field MIMO link.

At step S2105, the terminal sends second information to the network device.

In some embodiments, the network device may receive the second information. For example, the network device may receive the second information sent by the terminal. For another example, the network device may also receive the second information sent by another entity.

In some embodiments, the second information may be used to determine a second codeword, and the second codeword is the at least one first codeword determined by the terminal from the first codebook that meets the performance requirement.

In some embodiments, the second information may be number information of the second codeword in the first codebook. The first codebook may be a codebook determined based on the first information.

In an implementation, the first information may include at least one parameter group, and one of the at least one parameter group corresponds to at least one direction parameter and one curvature parameter. The number information may be a parameter group number, and different parameter groups correspond to different parameter group numbers.

In another implementation, the first information may include a direction parameter set and a curvature parameter set. The direction parameter set includes at least one direction parameter, and the curvature parameter set includes at least one curvature parameter. The number information may include direction number information and curvature number information. The direction number information is configured to determine one direction parameter from the direction parameter set, and the curvature number information is configured to determine one curvature parameter from the curvature parameter set.

Thus, the network device may determine the direction parameter and the curvature parameter based on the second information.

In some embodiments, the second information may be a precoding matrix indicator (PMI) of the second codeword.

In some embodiments, the name of the second information is not limited, for example, it may be "codeword information", "codeword number information", or the like.

In some embodiments, the terminal may send a second message, and the second message may include the second information. For example, the terminal may send the second message to the network device. In an example, the network device may receive the second message.

The second message may include at least one of uplink control information (UCI) or other messages sent by the terminal to the network device.

In some embodiments, the terminal may select an optimal codeword from the first codebook as the second codeword, and send the serial number (i.e., the PMI) of the second codeword to the network device.

At step S2106, the network device determines a precoding vector corresponding to the second codeword.

In some embodiments, the precoding vector may be used for downlink channel transmission. For example, the precoding vector may be used for precoding of downlink data (such as physical downlink shared channel (PDSCH)).

In some embodiments, the network device may determine the precoding vector corresponding to the second codeword based on the second information (for example, PMI).

In some embodiments, the network device may determine the precoding vector corresponding to the second codeword based on the second information and the first information.

In some embodiments, the network device may determine the direction parameter and the curvature parameter corresponding to the second codeword based on the second information; and determine the precoding vector corresponding to the second codeword based on the direction parameter and the curvature parameter.

In some embodiments, the network device may determine at least one first coefficient corresponding to the second codeword based on the direction parameter and the curvature parameter, and determine the precoding vector corresponding to the second codeword based on the at least one first coefficient. One of the at least one first coefficient is a coefficient of the second codeword corresponding to one antenna port, and the antenna port corresponds to at least one component unit of the first antenna array.

In some embodiments, for one antenna port, the network device may determine a difference between a first distance and a curvature radius, and determine the first coefficient of the second codeword corresponding to the antenna port based on the difference. The first distance is a distance between a position of the antenna port and a beam center position, and the beam center position is a position determined based on the direction parameter and the curvature parameter.

There are a plurality of ways to obtain the difference.

In an implementation, the network device may determine the beam center position based on the direction parameter, the curvature parameter, and a reference point of the first antenna array; determine the first distance between the position of the antenna port and the beam center position; and obtain the difference between the first distance and the curvature radius.

In another implementation, the network device may calculate the difference based on the direction parameter, the curvature parameter, the reference point of the first antenna array, and the position of the antenna port.

In some embodiments, the network device may obtain a first phase corresponding to the antenna port by calculating based on the difference; and obtain the first coefficient by calculating based on the first phase.

It should be noted that for optional implementations in which the network device determines the precoding vector corresponding to the second codeword in the step, reference may be made to optional implementations in which the terminal determines the precoding vector corresponding to the first codeword in the step S2102, which is not repeated herein.

The method in embodiments of the disclosure may include at least one of step S2101 to step S2106. For example, the step S2101 may be implemented as an independent embodiment, the step S2102 may be implemented as an independent embodiment, the step S2101 and the step S2102 may be implemented as an independent embodiment, the step S2103 and the step S2104 may be implemented as an independent embodiment, the step S2105 and the step S2106 may be implemented as an independent embodiment, the step S2101, the step S2102, the step S2103, and the step S2104 may be implemented as an independent embodiment, the step S2101, the step S2102, the step S2105, and the step S2106 may be implemented as an independent embodiment, and the step S2101, the step S2102, the step S2104, the step S2105, and the step S2106 may be implemented as an independent embodiment, which is not limited herein.

In some embodiments, the step S2101 to the step S2106 may be exchanged in order or performed simultaneously. For example, the step S2101 and the step S2103 may be exchanged in order or performed simultaneously, and the step S2101 and the step S2105 may be exchanged in order or performed simultaneously.

In some embodiments, the step S2101 to the step S2106 are all optional steps. For example, the step S2102, the step S2103, the step S2104, the step S2105, and the step S2106 are optional, and one or more of the steps may be omitted or substituted in different embodiments. For another example, the step S2103, the step S2104, the step S2105, and the step S2106 are optional, and one or more of the steps may be omitted or substituted in different embodiments.

In some embodiments, reference may be made to other optional implementations described before or after the description corresponding to FIG. 2A.

By adopting the above method, the first information is received, in which the first information includes the direction parameter and the curvature parameter, the direction parameter corresponds to the at least one direction angle of beamforming by the first antenna array, and the curvature parameter corresponds to the curvature or the curvature radius of the first antenna array relative to the at least one beamforming position, and the first antenna array is the antenna array for transmitting the wireless signal by the network device to the terminal; and the first codebook is determined based on the direction parameter and the curvature parameter. In this case, the first codebook constructed based on the direction parameter and the curvature parameter may match wireless propagation characteristics of a near-field region, thus transmission performance in the near-field region may be improved.

In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codeword", "codebook", "codepoint", "bit", "data", "program", and "chip" may be used interchangeably.

In some embodiments, the terms such as "codebook", "codeword" and "precoding matrix" may be used interchangeably. For example, a codebook may be a collection of one or more codewords/precoding matrices.

In some embodiments, the terms such as "uplink", "up link", "physical uplink" may be used interchangeably. The terms such as "downlink", "down link", "physical downlink" may be used interchangeably. The terms such as "side", "sidelink", "side communication", "sidelink communication", "direct", "direct link", "direct communication", "direct link communication" may be used interchangeably.

In some embodiments, the terms such as "DCI", "downlink (DL) assignment", "DL DCI", "uplink (UL) grant", "UL DCI" and the like may be used interchangeably.

In some embodiments, the terms such as "PDSCH", "DL data", "DL signal", "DL packet", "downlink data", "downlink signal", and "downlink packet" may be used interchangeably. The terms such as "physical uplink shared channel (PUSCH)", "UL data", "UL signal", "UL packet", "uplink data", "uplink signal", and "uplink packet" may be used interchangeably.

In some embodiments, terms such as "synchronization signal (SS)", "synchronization signal block (SSB)", "reference signal (RS)", "pilot", "pilot signal" and the like may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" or the like may be used interchangeably.

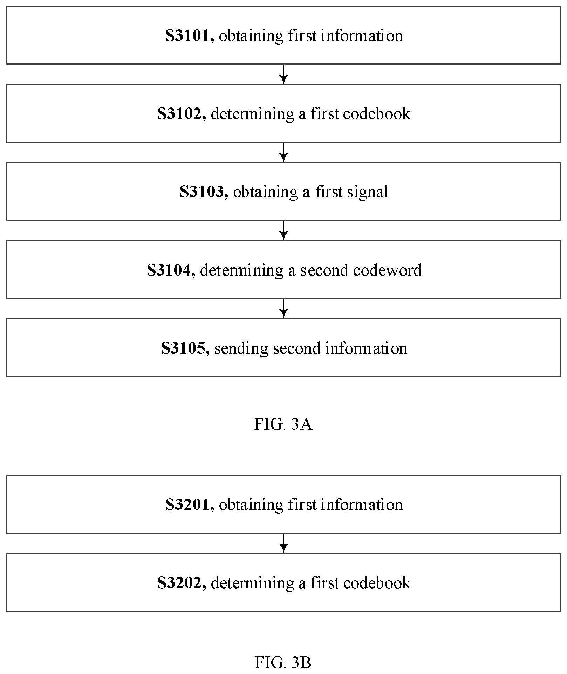

FIG. 3A is a flowchart illustrating a method for determining a codebook according to an embodiment of the disclosure. As shown in FIG. 3A, embodiments of the disclosure relate to a method for determining a codebook. The method may be performed by a terminal and include the following steps S3101 to S3105.

At step S3101, first information is obtained.

For optional implementations of step S3101, reference may be made to optional implementations of step S2101 in FIG. 2A and other related parts in the embodiments related to FIG. 2A, which is not repeated herein.

In some embodiments, the terminal may receive the first information sent by a network device, but is not limited herein. The terminal may also receive the first information sent by another entity.

In some embodiments, the terminal may obtain the first information stipulated by a protocol.

In some embodiments, the terminal may obtain the first information from an upper layer(s).

In some embodiments, the terminal may obtain the first information by performing processing.

In some embodiments, step S3101 may be omitted. The terminal may autonomously implement a function indicated by the first information, or the above function is default or predefined.

At step S3102, a first codebook is determined.

For optional implementations of step S3102, reference may be made to optional implementations of step S2102 in FIG. 2A and other related parts in the embodiments related to FIG. 2A, which is not repeated herein.

At step S3103, a first signal is obtained.

For optional implementations of step S3103, reference may be made to optional implementations of step S2103 in FIG. 2A and other related parts in the embodiments related to FIG. 2A, which is not repeated herein.

In some embodiments, the terminal may receive the first information sent by a network device, but is not limited herein. The terminal may also receive the first information sent by another entity.

In some embodiments, the terminal may obtain the first information stipulated by a protocol.

In some embodiments, the terminal may obtain the first information from an upper layer(s).

In some embodiments, the terminal may obtain the first information by performing processing.

In some embodiments, step S3103 may be omitted. The terminal may autonomously implement a function indicated by the first signal, or the above function is default or predefined.

At step S3104, a second codeword is determined.

For optional implementations of step S3104, reference may be made to optional implementations of step S2104 in FIG. 2A and other related parts in the embodiments related to FIG. 2A, which is not repeated herein.

At step S3105, second information is sent.

For optional implementations of step S3105, reference may be made to optional implementations of step S2105 in FIG. 2A and other related parts in the embodiments related to FIG. 2A, which is not repeated herein.

In some embodiments, the terminal may send the second information to the network device, but is not limited herein. The terminal may also send the second information to another entity.

In an example, the second information may be used for the network device to perform determining a precoding vector corresponding to the second codeword. For optional implementations thereof, reference may be made to optional implementations of step S2106 in FIG. 2A and other related parts in the embodiments related to FIG. 2A, which is not repeated herein.

The method in the embodiments of the disclosure may include at least one of the step S3101 to the step S3105. For example, the step S3102 may be implemented as an independent embodiment, the step S3104 may be implemented as an independent embodiment, the step S3101 and the step S3102 may be implemented as an independent embodiment, the step S3103 and the step S3104 may be implemented as an independent embodiment, the step S3104 and the step S3105 may be implemented as an independent embodiment, the step S3103, the step S3104, and the step S3105 may be implemented as an independent embodiment, and the step S3101, the step S3102, the step S3103, and the step S3104 may be implemented as an independent embodiment, which is not limited herein.

In some embodiments, the step S3101 to the step S3105 may be exchanged in order or performed simultaneously. For example, the step S3101 and the step S3103 may be exchanged in order or performed simultaneously, and the step S3101 and the step S3105 may be exchanged in order or performed simultaneously.

In some embodiments, the step S3101 to the step S3105 are all optional steps. For example, the step S3101, the step S3103, the step S3104, and the step S3105 are optional, and one or more of the steps may be omitted or substituted in different embodiments. For another example, the step S3103, the step S3104, and the step S3105 are optional, and one or more of the steps may be omitted or substituted in different embodiments.

FIG. 3B is a flowchart illustrating a method for determining a codebook according to an embodiment of the disclosure. As shown in FIG. 3B, embodiments of the disclosure relate to a method for determining a codebook. The method may be performed by a terminal and include the following steps S3201 to S3202.

At step S3201, first information is obtained.

For optional implementations of step S3201, reference may be made to optional implementations of step S2101 in FIG. 2A and optional implementations of step S3101 in FIG. 3A, and other related parts in the embodiments related to FIG. 2A and FIG. 3A, which is not repeated herein.

At step S3202, a first codebook is determined.

For optional implementations of step S3102, reference may be made to optional implementations of step S2102 in FIG. 2A and optional implementations of step S3102 in FIG. 3A, and other related parts in the embodiments related to FIG. 2A and FIG. 3A, which is not repeated herein.

In some embodiments, the above steps are optional.

In some embodiments, the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal.

In some embodiments, the first information includes at least one parameter group, one of the at least one parameter group corresponds to at least one direction parameter and one curvature parameter, and different parameter groups are not completely identical; or the first information includes a direction parameter set and a curvature parameter set, the direction parameter set includes at least one direction parameter, and the curvature parameter set includes at least one curvature parameter.

In some embodiments, the first information further includes a codebook type parameter, the codebook type parameter indicates that the first codebook is a codebook used by a terminal in a near-field region, and the near-field region is a region determined based on an antenna parameter of the first antenna array.

In some embodiments, a total number of direction parameters in the direction parameter set is a number determined based on an angular resolution of the first antenna array; or a total number of curvature parameters in the curvature parameter set is a number determined based on a distance resolution of the first antenna array.

In some embodiments, the direction parameter is a parameter determined based on a reference point of the first antenna array, and the reference point is a preset position on the first antenna array or a position outside the first antenna array.

In some embodiments, the first antenna array is a ULA, and the direction parameter includes a first direction angle relative to a dimension in which the ULA is located; or the first antenna array is a UPA, and the direction parameter includes a second direction angle and a third direction angle, the second direction angle and the third direction angle are direction angles relative to two different dimensions in which the UPA is located, respectively.

In some embodiments, the first codebook includes at least one first codeword, and determining the first codebook based on the direction parameter and the curvature parameter includes: determining a precoding vector corresponding to the first codeword based on the direction parameter and the curvature parameter; and determining the first codebook based on the precoding vector.

In some embodiments, determining the precoding vector corresponding to the first codeword based on the direction parameter and the curvature parameter includes: for one first codeword, determining at least one first coefficient corresponding to the first codeword based on the direction parameter and the curvature parameter, and determining the precoding vector corresponding to the first codeword based on the at least one first coefficient, in which one of the at least one first coefficient is a coefficient of the first codeword corresponding to one antenna port, and the antenna port corresponds to at least one component unit of the first antenna array.

In some embodiments, determining the at least one first coefficient corresponding to the first codeword based on the direction parameter and the curvature parameter includes: for one antenna port, determining a difference between a first distance and a curvature radius, and determining the first coefficient of the first codeword corresponding to the antenna port based on the difference, in which the first distance is a distance between a position of the antenna port and a beam center position, and the beam center position is a position determined based on the direction parameter and the curvature parameter.

In some embodiments, determining the difference between the first distance and the curvature radius includes: determining the beam center position based on the direction parameter, the curvature parameter, and a reference point of the first antenna array; determining the first distance between the position of the antenna port and the beam center position; and obtaining the difference between the first distance and the curvature radius.

In some embodiments, determining the difference between the first distance and the curvature radius includes: obtaining the difference by calculating based on the direction parameter, the curvature parameter, a reference point of the first antenna array, and the position of the antenna port.

In some embodiments, determining the first coefficient of the first codeword corresponding to the antenna port based on the difference includes: obtaining a first phase corresponding to the antenna port by calculating based on the difference; and obtaining the first coefficient by calculating based on the first phase.

In some embodiments, the method further includes: determining a second codeword from the first codebook, in which the second codeword is at least one first codeword in the first codebook that meets a performance requirement; and sending second information, in which the second codeword is number information of the second codeword in the first codebook.

In some embodiments, determining the second codeword from the first codebook includes: obtaining a measurement result of the at least one first codeword in the first codebook by performing channel measurement based on a received first signal; and determining the at least one first codeword with the measurement result meeting the performance requirement as the second codeword.

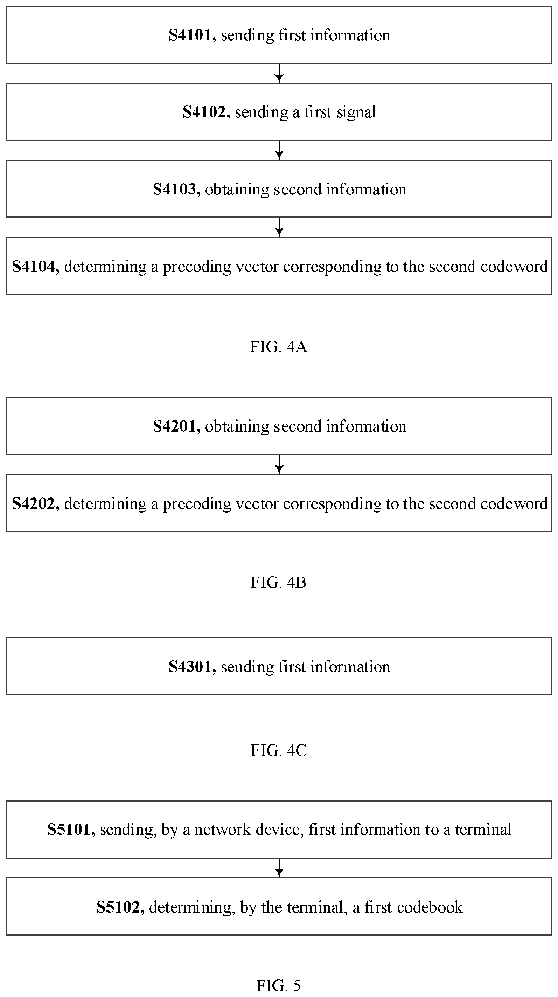

FIG. 4A is a flowchart illustrating a method for determining a codebook according to an embodiment of the disclosure. As shown in FIG. 4A, embodiments of the disclosure relate to a method for determining a codebook. The method may be performed by a network device and include the following steps S4101 to S4104.

At step S4101, first information is sent.

For optional implementations of step S4101, reference may be made to optional implementations of step S2101 in FIG. 2A and other related parts in the embodiments related to FIG. 2A, which is not repeated herein.

In some embodiments, the network device may send the first information to a terminal, but it is not limited herein. The network device may also send the first information to another entity.

In an example, the first information is used for the terminal to determine a first codebook. For optional implementations, reference may be made to optional implementations of step S2102 in FIG. 2A and other related parts in the embodiments related to FIG. 2A, which is not repeated herein.

At step S4102, a first signal is sent.

For optional implementations of step S4102, reference may be made to optional implementations of step S2103 in FIG. 2A and other related parts in embodiments related to FIG. 2A, which is not repeated herein.

In some embodiments, the network device may send the first signal to a terminal, but it is not limited herein. The network device may also send the first signal to another entity.

In an example, the first signal is used for the terminal to determine a second codeword. For optional implementations, reference may be made to optional implementations of step S2104 in FIG. 2A and other related parts in the embodiments related to FIG. 2A, which is not repeated herein.

At step S4103, second information is obtained.

For optional implementations of step S4103, reference may be made to optional implementations of step S2105 in FIG. 2A and other related parts in the embodiments related to FIG. 2A, which is not repeated herein.

In some embodiments, the network device may receive the second information sent by the terminal, but is not limited herein. The network device may also receive the second information sent by another entity.

In some embodiments, the network device may obtain the second information stipulated by a protocol.

In some embodiments, the network device may obtain the second information from an upper layer(s).

In some embodiments, the network device may obtain the second information by performing processing.

In some embodiments, step S4103 may be omitted. The network device may autonomously implement a function indicated by the second information, or the above function is default or predefined.

At step S4104, a precoding vector corresponding to the second codeword is determined.

For optional implementations of step S4104, reference may be made to optional implementations of step S2106 in FIG. 2A and other related parts in the embodiments related to FIG. 2A, which is not repeated herein.

The method in the embodiments of the disclosure may include at least one of the step S4101 to the step S4104. For example, the step S4101 may be implemented as an independent embodiment, the step S4102 may be implemented as an independent embodiment, the step S4103 and the step S4104 may be implemented as an independent embodiment, the step S4101 and the step S4102 may be implemented as an independent embodiment, and the step S4101, the step S4103, and the step S4104 may be implemented as an independent embodiment, which is not limited herein.

In some embodiments, the step S4101 to the step S4104 may be exchanged in order or performed simultaneously. For example, the step S4101 and the step S4102 may be exchanged in order or performed simultaneously, and the step S4101 and the step S4103 may be exchanged in order or performed simultaneously.

In some embodiments, the step S4101 to the step S4104 are all optional steps. For example, the step S4102, the step S4103, and the step S4104 are optional, and one or more of the steps may be omitted or substituted in different embodiments. For another example, the step S4101, the step S4103, and the step S4104 are optional, and one or more of the steps may be omitted or substituted in different embodiments.

FIG. 4B is a flowchart illustrating a method for determining a codebook according to an embodiment of the disclosure. As shown in FIG. 4B, embodiments of the disclosure relate to a method for determining a codebook. The method may be performed by a network device and include the following steps S4201 to S4202.

At step S4201, second information is obtained.

For optional implementations of step S4201, reference may be made to optional implementations of step S2105 in FIG. 2A, optional implementations of step S4103 in FIG. 4A, and other related parts in the embodiments related to FIG. 2A and FIG. 4A, which is not repeated herein.

At step S4202, a precoding vector corresponding to the second codeword is determined.

For optional implementations of step S4202, reference may be made to optional implementations of step S2106 in FIG. 2A, optional implementations of step S4104 in FIG. 4A, and other related parts in the embodiments related to FIG. 2A and FIG. 4A, which is not repeated herein.

In some embodiments, the above steps are optional steps.

FIG. 4C is a flowchart illustrating a method for determining a codebook according to an embodiment of the disclosure. As shown in FIG. 4C, embodiments of the disclosure relate to a method for determining a codebook. The method may be performed by a network device and include the following step S4301.

At step S4301, first information is sent.

For optional implementations of step S4301, reference may be made to optional implementations of step S2101 in FIG. 2A and optional implementations of step S4101 in FIG. 4A, and other related parts in the embodiments related to FIG. 2A and FIG. 4A, which is not repeated herein.

In some embodiments, the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal, and the direction parameter and the curvature parameter are used to determine a first codebook.

In some embodiments, the first information includes at least one parameter group, one of the at least one parameter group corresponds to at least one direction parameter and one curvature parameter, and different parameter groups are not completely identical; or the first information includes a direction parameter set and a curvature parameter set, the direction parameter set includes at least one direction parameter, and the curvature parameter set includes at least one curvature parameter.

In some embodiments, the first information further includes a codebook type parameter, the codebook type parameter indicates that the first codebook is a codebook used by a terminal in a near-field region, and the near-field region is a region determined based on an antenna parameter of the first antenna array.

In some embodiments, a total number of direction parameters in the direction parameter set is a number determined based on an angular resolution of the first antenna array; or a total number of curvature parameters in the curvature parameter set is a number determined based on a distance resolution of the first antenna array.

In some embodiments, the direction parameter is a parameter determined based on a reference point of the first antenna array, and the reference point is a preset position on the first antenna array or a position outside the first antenna array.

In some embodiments, the first antenna array is a ULA, and the direction parameter includes a first direction angle relative to a dimension in which the ULA is located; or the first antenna array is a UPA, and the direction parameter includes a second direction angle and a third direction angle, the second direction angle and the third direction angle are direction angles relative to two different dimensions in which the UPA is located, respectively.

In some embodiments, the method further includes: receiving second information, in which the second information is number information of a second codeword in the first codebook, and the second codeword is at least one first codeword determined by the terminal from the first codebook that meets a performance requirement.

In some embodiments, the method further includes: determining a direction parameter and a curvature parameter corresponding to the second codeword based on the second information; and determining a precoding vector corresponding to the second codeword based on the direction parameter and the curvature parameter.

In some embodiments, determining the precoding vector corresponding to the second codeword based on the direction parameter and the curvature parameter includes: determining at least one first coefficient corresponding to the second codeword based on the direction parameter and the curvature parameter, and determining the precoding vector corresponding to the second codeword based on the at least one first coefficient, in which one of the at least one first coefficient is a coefficient of the second codeword corresponding to one antenna port, and the antenna port corresponds to at least one component unit of the first antenna array.

In some embodiments, determining the at least one first coefficient corresponding to the second codeword based on the direction parameter and the curvature parameter includes: for one antenna port, determining a difference between a first distance and a curvature radius, and determining the first coefficient of the second codeword corresponding to the antenna port based on the difference, in which the first distance is a distance between a position of the antenna port and a beam center position, and the beam center position is a position determined based on the direction parameter and the curvature parameter.

In some embodiments, determining the difference between the first distance and the curvature radius includes: determining the beam center position based on the direction parameter, the curvature parameter, and a reference point of the first antenna array; determining the first distance between the position of the antenna port and the beam center position; and obtaining the difference between the first distance and the curvature radius.

In some embodiments, determining the difference between the first distance and the curvature radius includes: obtaining the difference by calculating based on the direction parameter, the curvature parameter, a reference point of the first antenna array, and the position of the antenna port.

In some embodiments, determining the first coefficient of the second codeword corresponding to the antenna port based on the difference includes: obtaining a first phase corresponding to the antenna port by calculating based on the difference; and obtaining the first coefficient by calculating based on the first phase.

FIG. 5 is a flowchart illustrating a method for determining a codebook according to an embodiment of the disclosure. As shown in FIG. 5, embodiments of the disclosure relate to a method for determining a codebook. The method may include the following steps S5101 to S5102.

At step S5101, a network device sends first information to a terminal.

For optional implementations of step S5101, reference may be made to optional implementations of step S2101 in FIG. 2A, optional implementations of step S3101 in FIG. 3A, and optional implementations of step S4101 in FIG. 4A, and other related parts in the embodiments related to FIG. 2A, FIG. 3A, and FIG. 4A, which is not repeated herein.

At step S5102, a first codebook is determined by the terminal.

For optional implementations of step S5102, reference may be made to optional implementations of step S2102 in FIG. 2A, and optional implementations of step S3102 in FIG. 3A, and other related parts in the embodiments related to FIG. 2A and FIG. 3A, which is not repeated herein.

In some embodiments, the above method may include the method described in the embodiments of the above communication system, terminal, network device, etc., which is not repeated herein.

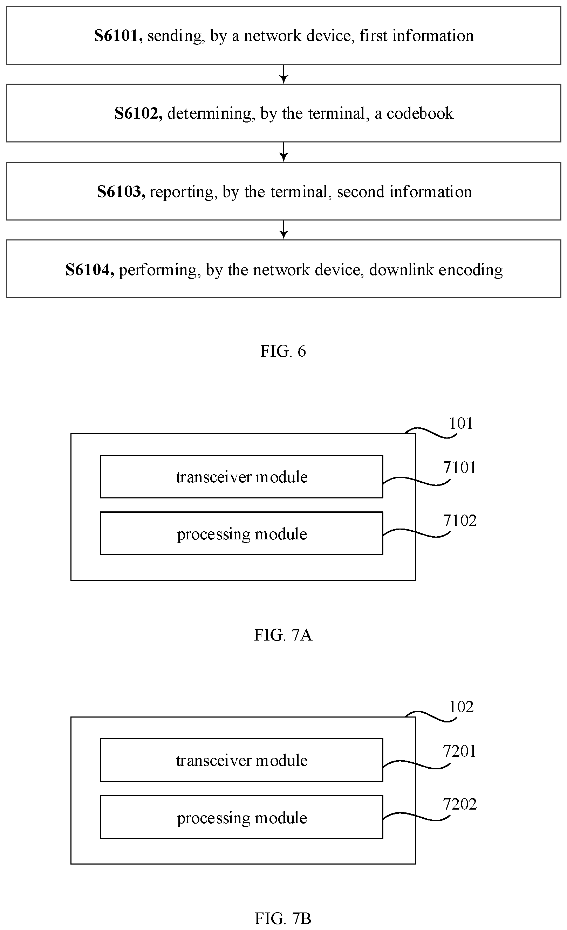

FIG. 6 is a flowchart illustrating a method for determining a codebook according to an embodiment of the disclosure. As shown in FIG. 6, embodiments of the disclosure relate to a method for determining a codebook. The method may be performed by a communication system and include the following steps S6101 to S6104.

At step S6101, a network device sends first information.

In some embodiments, the network device may notify a terminal, via an RRC signaling, to use a near-field codebook and configure codebook-related parameters for the terminal.

In some embodiments of the disclosure, each codeword in a codebook used by the terminal in the near-field may be constructed based on a direction angle and a curvature.

In an implementation, for a ULA, each codeword is constructed based on a two-tuple $(\phi,k)$, in which $\phi$ is a direction angle in a dimension in which the UPA is located, and $k$ is a curvature.

In another implementation, for a UPA, each codeword is constructed based on a three-tuple $(\theta,\phi,k)$, in which $\theta$ and $\phi$ are direction angles in two dimensions of the UPA (for example, a vertical dimension direction angle and a horizontal dimension direction angle), and *k* is a curvature.

In some embodiments, the above direction angles are determined from their respective sets, and a set is composed of all candidate values of the direction angle. For example, $\theta \in \Theta$, $\phi \in \Phi$, in which $\Theta$ and $\Phi$ are sets of direction angles for the two dimensions, respectively. In an example, the size of the set ($|\Theta|$ and $|\Phi|$), i.e., the number of elements in the set, depends on an angular resolution of an antenna array in that dimension.

In some embodiments, the above direction angles are defined based on a reference point of the antenna array. Theoretically, the reference point may be any point on the antenna array, or even a point outside the antenna array. Typically, a centroid of the array may be adopted as the reference point.

In an implementation, for a ULA array, an array center or any end (point or antenna element) may be determined as the reference point.

In another implementation, for a UPA array, the centroid of the array, a point on an edge (for example, a midpoint), or a point or antenna element at a corner may be determined as the reference point.

In some embodiments, the above curvature is also determined from a set, which is composed of all candidate values of the curvature. For example, $k \in K$, in which K is a set of curvatures. In an example, the size of the set ($|K|$), i.e., the number of elements in the set, depends on a distance resolution of the antenna array in that dimension.

In an example, the above curvature (*k*) may be replaced by a curvature radius ( $r = \dfrac{1}{k}$ ); correspondingly, the curvature set may also be replaced by a curvature radius set, i.e., $\mathbf{R} = \left\{ \dfrac{1}{k} \mid k \in \mathbf{K} \right\}$ .

In some embodiments of the disclosure, the first information may include at least one of a codebook type indication, a codebook parameter scheme one, and a codebook parameter scheme two.

The codebook type indication may be used to instruct a UE to use a near-field codebook. For example: codebook Type = typeI-NearField.

The codebook parameter scheme one may be a parameter tuple sequence, which may specifically include at least one of an "angle-curvature" parameter tuple sequence or an "angle-curvature radius" parameter tuple sequence.

For the ULA, an expression of the "angle-curvature" parameter tuple sequence may be: $\{(\phi_n, k_n) \mid n = 1,2,...\}$, in which $\forall n \neq m$, $\phi_n \neq \phi_m \cup k_n \neq k_m$ holds. In this expression, $\phi$ is a direction angle in a dimension in which the UPA is located, and k is the curvature.

For the UPA, an expression of the "angle-curvature" parameter tuple sequence may be: $\{(\theta_n, \phi_n, k_n) \mid n = 1,2,...\}$, in which $\forall n \# m$, $\theta_n \neq \theta_m \cup \phi_n \neq \phi_m \cup k_n \neq k_m$ holds.

For the ULA, an expression of the "angle-curvature radius" parameter tuple sequence may be: $\{(\phi_n, r_n) \mid n = 1,2,...\}$, in which $\forall n \# m$, $\phi_n \neq \phi_m \cup r_n \# r_m$ holds.

For the UPA, an expression of the "angle-curvature radius" parameter tuple sequence may be:$\{((\theta_n, \phi_n, r_n) \mid n = 1,2,...\}$, in which $\forall n \neq m$, $\theta_n \neq \theta_m \cup \phi_n \neq \phi_m \cup r_n \neq r_m$ holds.

The codebook parameter scheme two may include a plurality of parameter sequences, which may specifically include at least one of an "angle set/sequence + curvature set/sequence" or an "angle set/sequence + curvature radius set/sequence".

For the ULA, an expression of the "angle set/sequence + curvature set/sequence" may be: $\Phi = \{\phi_1, \phi_2,...\}$, K = $\{k_1, k_2,...\}$.

For the UPA, an expression of the "angle set/sequence + curvature set/sequence" may be: $\Theta = \{\theta_1, \theta_2,...\}$, $\Phi = \{\phi_1, \phi_2,...\}$, K = $\{k_1, k_2,...\}$

For the ULA, an expression of the "angle set/sequence + curvature radius set/sequence" may be: $\Phi = \{\phi_1, \phi_2,...\}$, R = $\{r_1, r_2,...\}$.

For the UPA, an expression of the "angle set/sequence + curvature radius set/sequence" may be: $\Theta = \{\theta_1, \theta_2,...\}$, $\Phi = \{\phi_1, \phi_2,...\}$, R = $\{r_1, r_2,...\}$.

It should be noted that for definitions of parameters in the above expressions, reference may be made to the description in the above embodiments, which is not repeated herein.

At step S6102, the terminal determines a codebook.

For example, the terminal may determine (construct) the codebook based on the above parameters, and the codebook includes all codewords in the codebook. Specifically, a specific precoding vector or matrix may be obtained by performing the following steps 1 to 3 for each codeword:

At step 1, a beam center position is calculated based on a direction angle and a curvature (or curvature radius) corresponding to the codeword.

At step 2, for each antenna element in the array (located at *x*), a difference between a distance of each antenna element to the above beam center position and the curvature radius ( $r = \dfrac{1}{k}$ ) is calculated, and is denoted as *d(x)*.

At step 3, an initial phase corresponding to the antenna element (located at *x*) is determined as $\dfrac{2\pi}{\lambda} d(x)$ , i.e., a complex coefficient of the codeword (precoding vector) corresponding to the antenna element is $e^{j\frac{2\pi}{\lambda} d(x)}$ , where $j = \sqrt{-1}$ .

At step S6103, the terminal reports second information.

In some embodiments, the second information may include a PMI. For example, the terminal may select an optimal codeword (precoding vector or matrix) from the above codebook, and number the optimal codeword (precoding vector or matrix), i.e., the PMI, and report the PMI to the network device.

In some embodiments, the network device may send a CSI-RS and notify the terminal of its related configuration. The terminal may measure a downlink channel based on the CSI-RS sent and configured by the network device, select the optimal codeword (precoding vector or matrix) from the constructed codebook (step S6102), and then report a serial number (i.e., PMI) of the optimal codeword in the codebook to a gNB.

At step S6104, the network device performs downlink encoding.

In some embodiments, the network device may determine the precoding vector or matrix based on the PMI fed back by the terminal (the process is the same as the steps on the terminal side in step S6102), and apply the precoding vector or matrix to precoding of the downlink data (for example, PDSCH).

Using the above method, a codebook design for a near-field UE is provided. The codebook is constructed based on the direction angle and the curvature (or curvature radius). The optimal codeword selected by the near-field UE may effectively utilize channel characteristics of the near-field and improve a capacity of a near-field MIMO link.

In some embodiments of the disclosure, a communication system is provided. The communication system may include a terminal, configured to perform the method for determining the codebook performed by the terminal in the above embodiments of the disclosure, and a network device, configured to perform the method for determining the codebook performed by the network device in the above embodiments of the disclosure.

Embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network functional node, a core network device, etc.) in any one of the above methods.

It should be noted that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram illustrating a terminal 101 according to an embodiment of the disclosure.

As shown in FIG. 7A, the terminal 101 may include at least one of: a transceiver module 7101, or a processing module 7102. In some embodiments, the transceiver module 7101 is configured to receive first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal. The processing module 7102 is configured to determine a first codebook based on the direction parameter and the curvature parameter. In an example, the transceiver module 7101 is configured to perform at least one of the communication steps (e.g., S2101, S2103, and S2105, but is not limited herein) such as sending and/or receiving performed by the terminal 101 in any of the above methods, which is not repeated herein. In an example, the processing module 7102 is configured to perform at least one of other steps (e.g., S2102, and S2104, but is not limited herein) performed by the terminal 101 in any of the above methods, which is not repeated herein.

FIG. 7B is a block diagram illustrating a network device according to an embodiment of the disclosure. As shown in FIG. 7B, the network device 102 may include at least one of: a transceiver module 7201, or a processing module 7202. In some embodiments, the transceiver module 7101 is configured to send first information, in which the first information includes a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal, and the direction parameter and the curvature parameter are used to determine a first codebook. In an example, the transceiver module 7201 is configured to perform at least one of the communication steps (e.g., S2101, S2103, and S2105, but is not limited herein) such as sending and/or receiving performed by the network device 102 in any of the above methods, which is not repeated herein. In an example, the processing module 7202 is configured to perform at least one of other steps (e.g., S2102, and S2104, but is not limited herein) performed by the network device 102 in any of the above methods, which is not repeated herein.

In some embodiments, the transceiver module may include a sending module and/or a receiving module. The sending module and the receiving module may be separate or may be integrated. In an example, the transceiver module may be interchangeable with a transceiver.

In some embodiments, the processing module may be a single module, or may include a plurality of sub-modules. In an example, the plurality of sub-modules respectively perform all or part of the steps required to be performed by the processing module. In an example, the processing module may be interchangeable with a processor.

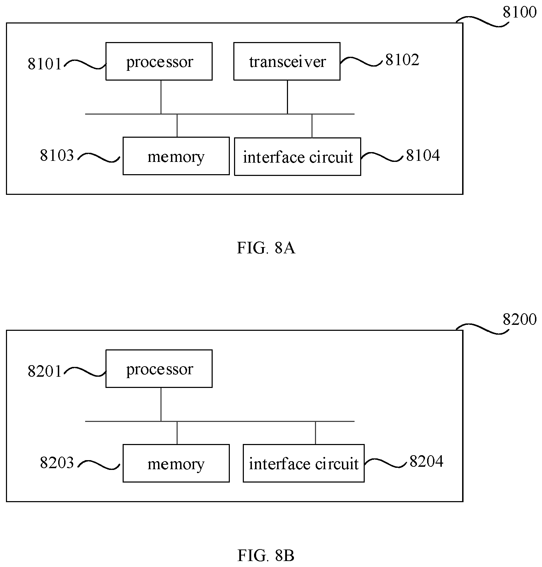

FIG. 8A is a block diagram illustrating a communication device 8100 according to an embodiment of the disclosure.

The communication device 8100 may be a network device (e.g., an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the method in the above method embodiments. For details, reference may be made to the description in the above method embodiments.

As shown in FIG. 8A, the communication device 8100 may include one or more processors 8101. The processor 8101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. In an example, the communication device 8100 may be configured to perform any one of the above methods. In an example, the one or more processors 8101 are configured to invoke instructions to cause the communication device 8100 to perform any one of the above methods.

In some embodiments, the communication device 8100 further includes one or more transceivers 8102. When the communication device 8100 includes one or more transceivers 8102, the transceiver 8102 performs at least one of the communication steps (e.g., S2101, S2103, and S2105, but is not limited herein) such as sending and/or receiving in the above method, and the processor 8101 performs at least one of other steps (e.g., S2102, and S2104, but is not limited herein).

In some embodiments, the transceiver may include a receiver and a transmitter, which may be separate or integrated together. In an example, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In an example, the communication device 8100 further includes one or more memories 8103 for storing instructions. In an example, all or some of the memories 8103 may also be located outside the communication device 8100. In optional embodiments, the communication device 8100 further includes one or more interface circuits 8104. In an example, the interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 in the above embodiments may be a network device or a terminal, but a scope of the communication device 8100 in the disclosure is not limited to this, and a structure of the communication device 8100 may not be limited by FIG. 8A. The communication device may be an independent device or a part of a larger device. For example, the communication device may be: 1) an independent IC, or a chip, or a chip system or a subsystem; 2) a collection including one or more IC, In an example, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 8B is a block diagram illustrating a chip 8200 according to an embodiment of the disclosure. For a case where the communication device 8100 may be a chip or a chip system, reference may be made to the block diagram of the chip 8200 shown in FIG. 8B, but not limited to this.

The chip 8200 includes one or more processors 8201. The chip 8200 is configured to execute any one of the above methods.

In some embodiments, the chip 8200 further includes one or more interface circuits 8204. In an example, terms such as interface circuit, interface, transceiver pin, transceiver, etc. may be used interchangeably. In some embodiments, the chip 8200 further includes one or more memories 8203 for storing instructions. In an example, all or some of the memories 8203 may be located outside the chip 8200.

In an example, the interface circuit 8204 is connected to a memory 8203. The interface circuit 8204 may be configured to receive signals from the memory 8203 or other devices, and may be configured to send signals to the memory 8203 or other devices. For example, the interface circuit 8204 may read the instructions stored in the memory 8203 and send the instructions to the processor 8201.

In some embodiments, the interface circuit 8204 performs at least one of the communication steps such as sending and/or receiving in the above method (e.g., step S2101, step S2103, and step S2105, but not limited herein). The interface circuit 8204 performing communication step such as sending and/or receiving in the above method refers to, for example, the interface circuit 8204 performing data interaction among the processor 8201, the chip 8200, the memory 8203, or a transceiver device. In some embodiments, the processor 8201 may perform at least one of other steps (e.g., step S2102, and step S2104, but not limited herein).

In various embodiments of virtual devices, physical devices, chips, and the like, the modules and/or components described may be arbitrarily combined or separated as required. In an example, some or all steps may also be executed collaboratively by multiple modules and/or components, and no specific limitations are imposed herein.

The disclosure also provides a storage medium for storing instructions. When the instructions are running on the communication device 8100, the communication device 8100 is caused to implement any one of the above methods. In an example, the above storage medium is an electronic storage medium. In an example, the above storage medium is a computer-readable storage medium, which is not limited to this, and the above storage medium may also be a storage medium readable by other devices. In an example, the above storage medium may be a non-transitory storage medium, which is not limited to this, and the above storage medium may also be a transitory storage medium.

The disclosure also provides a program product. When the program product is executed by the communication device 8100, the communication device 8100 is caused to implement any one of the above methods. In an example, the above program product is a computer program product.

The disclosure also provides a computer program. When the computer program is running on a computer, the computer is caused to implement any one of the above methods.

**Claims**

1. A method for determining a codebook, comprising:

   receiving first information, wherein the first information comprises a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and
   determining a first codebook based on the direction parameter and the curvature parameter.

2. The method according to claim 1, wherein the first information comprises at least one parameter group, one of the at least one parameter group corresponds to at least one direction parameter and one curvature parameter, and parameters of different parameter groups are not completely identical; or

the first information comprises a direction parameter set and a curvature parameter set, the direction parameter set comprises at least one direction parameter, and the curvature parameter set comprises at least one curvature parameter.

3.  The method according to claim 2, wherein the first information further comprises a codebook type parameter, the codebook type parameter indicates that the first codebook is a codebook used by a terminal in a near-field region, and the near-field region is a region determined based on an antenna parameter of the first antenna array.

4.  The method according to claim 2 or 3, wherein a total number of direction parameters in the direction parameter set is a number determined based on an angular resolution of the first antenna array; or a total number of curvature parameters in the curvature parameter set is a number determined based on a distance resolution of the first antenna array.

5.  The method according to any one of claims 1 to 4, wherein the direction parameter is a parameter determined based on a reference point of the first antenna array, and the reference point is a position on the first antenna array or a position outside the first antenna array.

6.  The method according to any one of claims 1 to 5, wherein the first antenna array is a uniform linear array (ULA), and the direction parameter comprises a first direction angle relative to a dimension in which the ULA is located; or the first antenna array is a uniform planar array (UPA), and the direction parameter comprises a second direction angle and a third direction angle, the second direction angle and the third direction angle are direction angles relative to two different dimensions in which the UPA is located, respectively.

7.  The method according to any one of claims 1 to 6, wherein the first codebook comprises at least one first codeword, and determining the first codebook based on the direction parameter and the curvature parameter comprises:

    determining a precoding vector corresponding to the first codeword based on the direction parameter and the curvature parameter; and determining the first codebook based on the precoding vector.

8.  The method according to claim 7, wherein determining the precoding vector corresponding to the first codeword based on the direction parameter and the curvature parameter comprises:
    for one first codeword, determining at least one first coefficient corresponding to the first codeword based on the direction parameter and the curvature parameter, and determining the precoding vector corresponding to the first codeword based on the at least one first coefficient, wherein one of the at least one first coefficient is a coefficient of the first codeword corresponding to one antenna port, and the antenna port corresponds to at least one component unit of the first antenna array.

9.  The method according to claim 8, wherein determining the at least one first coefficient corresponding to the first codeword based on the direction parameter and the curvature parameter comprises:
    for one antenna port, determining a difference between a first distance and a curvature radius, and determining the first coefficient of the first codeword corresponding to the antenna port based on the difference, wherein the first distance is a distance between a position of the antenna port and a beam center position, and the beam center position is a position determined based on the direction parameter and the curvature parameter.

10. The method according to claim 9, wherein determining the difference between the first distance and the curvature radius comprises:

    determining the beam center position based on the direction parameter, the curvature parameter, and a reference point of the first antenna array; determining the first distance between the position of the antenna port and the beam center position; and obtaining the difference between the first distance and the curvature radius.

11. The method according to claim 9, wherein determining the difference between the first distance and the curvature radius comprises:
    obtaining the difference by calculating based on the direction parameter, the curvature parameter, a reference point of the first antenna array, and the position of the antenna port.

12. The method according to any one of claims 9 to 11, wherein determining the first coefficient of the first codeword corresponding to the antenna port based on the difference comprises:

    obtaining a first phase corresponding to the antenna port by calculating based on the difference; and obtaining the first coefficient by calculating based on the first phase.

13. The method according to any one of claims 1 to 12, further comprising:

> determining a second codeword from the first codebook, wherein the second codeword is at least one first codeword in the first codebook that meets a performance requirement; and sending second information, wherein the second codeword is number information of the second codeword in the first codebook.

14. The method according to claim 13, wherein determining the second codeword from the first codebook comprises:

> obtaining a measurement result of the at least one first codeword in the first codebook by performing channel measurement based on a received first signal; and determining the at least one first codeword with the measurement result meeting the performance requirement as the second codeword.

15. A method for determining a codebook, applied to a network device, comprising:
sending first information, wherein the first information comprises a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal, and the direction parameter and the curvature parameter are used to determine a first codebook.

16. The method according to claim 15, wherein the first information comprises at least one parameter group, one of the at least one parameter group corresponds to at least one direction parameter and one curvature parameter, and parameters of different parameter groups are not completely identical; or
the first information comprises a direction parameter set and a curvature parameter set, the direction parameter set comprises at least one direction parameter, and the curvature parameter set comprises at least one curvature parameter.

17. The method according to claim 16, wherein the first information further comprises a codebook type parameter, the codebook type parameter indicates that the first codebook is a codebook used by a terminal in a near-field region, and the near-field region is a region determined based on an antenna parameter of the first antenna array.

18. The method according to claim 16 or 17, wherein a total number of direction parameters in the direction parameter set is a number determined based on an angular resolution of the first antenna array; or
a total number of curvature parameters in the curvature parameter set is a number determined based on a distance resolution of the first antenna array.

19. The method according to any one of claims 15 to 18, wherein the direction parameter is a parameter determined based on a reference point of the first antenna array, and the reference point is a preset position on the first antenna array or a position outside the first antenna array.

20. The method according to any one of claims 15 to 19, wherein the first antenna array is a uniform linear array (ULA), and the direction parameter comprises a first direction angle relative to a dimension in which the ULA is located; or
the first antenna array is a uniform planar array (UPA), and the direction parameter comprises a second direction angle and a third direction angle, the second direction angle and the third direction angle are direction angles relative to two different dimensions in which the UPA is located, respectively.

21. The method according to any one of claims 15 to 20, further comprising:
receiving second information, wherein the second information is number information of a second codeword in the first codebook, and the second codeword is at least one first codeword determined by the terminal from the first codebook that meets a performance requirement.

22. The method according to claim 21, further comprising:

> determining a direction parameter and a curvature parameter corresponding to the second codeword based on the second information; and determining a precoding vector corresponding to the second codeword based on the direction parameter and the curvature parameter.

23. The method according to claim 22, wherein determining the precoding vector corresponding to the second codeword based on the direction parameter and the curvature parameter comprises:
determining at least one first coefficient corresponding to the second codeword based on the direction parameter and the curvature parameter, and determining the precoding vector corresponding to the second codeword based on the at least one first coefficient, wherein one of the at least one first coefficient is a coefficient of the second codeword corresponding to one antenna port, and the antenna port corresponds to at least one component unit of the first antenna array.

24. The method according to claim 23, wherein determining the at least one first coefficient corresponding to the second codeword based on the direction parameter and the curvature parameter comprises:
for one antenna port, determining a difference between a first distance and a curvature radius, and determining the first coefficient of the second codeword corresponding to the antenna port based on the difference, wherein the first distance is a distance between a position of the antenna port and a beam center position, and the beam center position is a position determined based on the direction parameter and the curvature parameter.

25. The method according to claim 24, wherein determining the difference between the first distance and the curvature radius comprises:

determining the beam center position based on the direction parameter, the curvature parameter, and a reference point of the first antenna array;
determining the first distance between the position of the antenna port and the beam center position; and
obtaining the difference between the first distance and the curvature radius.

26. The method according to claim 24, wherein determining the difference between the first distance and the curvature radius comprises:
obtaining the difference by calculating based on the direction parameter, the curvature parameter, a reference point of the first antenna array, and the position of the antenna port.

27. The method according to any one of claims 24 to 26, wherein determining the first coefficient of the second codeword corresponding to the antenna port based on the difference comprises:

obtaining a first phase corresponding to the antenna port by calculating based on the difference; and
obtaining the first coefficient by calculating based on the first phase.

28. A method for determining a codebook, comprising:

sending, by a network device, first information to a terminal, wherein the first information comprises a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and
determining, by the terminal, a first codebook based on the direction parameter and the curvature parameter.

29. A terminal, comprising:

a transceiver module, configured to receive first information, wherein the first information comprises a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal; and
a processing module, configured to determine a first codebook based on the direction parameter and the curvature parameter.

30. A network device, comprising:
a transceiver module, configured to send first information, wherein the first information comprises a direction parameter and a curvature parameter, the direction parameter corresponds to at least one direction angle of beamforming by a first antenna array, and the curvature parameter corresponds to a curvature or a curvature radius of the first antenna array relative to at least one beamforming position, and the first antenna array is an antenna array for transmitting a wireless signal by a network device to a terminal, and the direction parameter and the curvature parameter are used to determine a first codebook.

31. A communication device, comprising:

one or more processors;
wherein the communication device is configured to implement the method according to any one of claims 1 to 14, or to implement the method according to any one of claims 15 to 27.

32. A storage medium storing instructions which, when executed on a communication device, cause the communication device to implement the method according to any one of claims 1 to 14, or to implement the method according to any one of claims 15 to 27.

33. A communication system, comprising: a terminal, configured to implement the method according to any one of claims 1 to 14, and a network device, configured to implement the method according to any one of claims 15 to 27.

communication system 100

terminal 101

network device 102

FIG. 1A

11

12

13

$D$

A

B

FIG. 1B

101

A1  A2  ...  An

FIG. 1C

101

A1  A2  ...  An

FIG. 1D

terminal 101

network device 102

**S2101,** sending first information

**S2102,** determining the first codebook

**S2103,** sends a first signal

**S2104,** determining a second codeword

**S2105,** sending second information

**S2106,** determining a precoding vector corresponding to the second codeword

FIG. 2A

C

$x_1$   $x_{ref}$   X-axis

FIG. 2B

S3101, obtaining first information

↓

S3102, determining a first codebook

↓

S3103, obtaining a first signal

↓

S3104, determining a second codeword

↓

S3105, sending second information

FIG. 3A

S3201, obtaining first information

↓

S3202, determining a first codebook

FIG. 3B

S4101, sending first information

S4102, sending a first signal

S4103, obtaining second information

S4104, determining a precoding vector corresponding to the second codeword

FIG. 4A

S4201, obtaining second information

S4202, determining a precoding vector corresponding to the second codeword

FIG. 4B

S4301, sending first information

FIG. 4C

S5101, sending, by a network device, first information to a terminal

S5102, determining, by the terminal, a first codebook

FIG. 5

S6101, sending, by a network device, first information

↓

S6102, determining, by the terminal, a codebook

↓

S6103, reporting, by the terminal, second information

↓

S6104, performing, by the network device, downlink encoding

FIG. 6

101

transceiver module ⟩ 7101

processing module ⟩ 7102

FIG. 7A

102

transceiver module ⟩ 7201

processing module ⟩ 7202

FIG. 7B

8100

8101 — processor    transceiver — 8102

8103 — memory    interface circuit — 8104

FIG. 8A

8200

8201 — processor

8203 — memory    interface circuit — 8204

FIG. 8B

## INTERNATIONAL SEARCH REPORT

| International application No. |
| --- |
| **PCT/CN2023/114811** |

| A. | CLASSIFICATION OF SUBJECT MATTER |
| --- | --- |

H04B7/0456(2017.01)i

According to International Patent Classification (IPC) or to both national classification and IPC

| B. | FIELDS SEARCHED |
| --- | --- |

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

3GPP, CNTXT, VEN, CNKI, ENTXTC: 波束成形, 波束赋型, 波束赋形, 方向, 角度, 近场, 距离, 码本, 曲率, 天线, 位置, 预编码, 阵列, angle, beamforming, codebook, DFT, distance, field, near, nearfield, PMI, ULA, UPA

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 116566446 A (DATANG MOBILE COMMUNICATIONS EQUIPMENT CO., LTD.) 08 August 2023 (2023-08-08) description, paragraphs [0002]-[0128] | 1-33 |
| A | CN 114624714 A (HUAWEI TECHNOLOGIES CO., LTD.) 14 June 2022 (2022-06-14) entire document | 1-33 |
| A | CN 116192212 A (TSINGHUA UNIVERSITY) 30 May 2023 (2023-05-30) entire document | 1-33 |
| A | CN 116567692 A (HUAWEI TECHNOLOGIES CO., LTD.) 08 August 2023 (2023-08-08) entire document | 1-33 |
| A | WO 2022266913 A1 (QUALCOMM INC.) 29 December 2022 (2022-12-29) entire document | 1-33 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 April 2024** | **03 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/114811** |

| Patent document cited in search report | | | Publication date (day/month/year) | Patent family member(s) | | | Publication date (day/month/year) |
| --- | --- | --- | --- | --- | --- | --- | --- |
| CN | 116566446 | A | 08 August 2023 | None | | | |
| CN | 114624714 | A | 14 June 2022 | None | | | |
| CN | 116192212 | A | 30 May 2023 | None | | | |
| CN | 116567692 | A | 08 August 2023 | None | | | |
| WO | 2022266913 | A1 | 29 December 2022 | KR | 20240024088 | A | 23 February 2024 |

Form PCT/ISA/210 (patent family annex) (July 2022)